(19) Europäisches Patentamt
European Patent Office
Office européen des brevets

(11) EP 2 823 961 B1

(12) **EUROPEAN PATENT SPECIFICATION**

(45) Date of publication and mention of the grant of the patent:
**01.05.2019 Bulletin 2019/18**

(21) Application number: **13757049.5**

(22) Date of filing: **05.03.2013**

(51) Int Cl.:
***B32B 7/12*** (2006.01) ***C09J 7/38*** (2018.01)
***C09J 7/22*** (2018.01) ***C09J 7/25*** (2018.01)
***C08J 5/12*** (2006.01) ***B32B 27/36*** (2006.01)
***C08G 18/62*** (2006.01) ***C09J 133/06*** (2006.01)
***C08L 75/04*** (2006.01) ***C08J 7/12*** (2006.01)

(86) International application number:
**PCT/JP2013/055934**

(87) International publication number:
**WO 2013/133256 (12.09.2013 Gazette 2013/37)**

(54) **GAS BARRIER FILM LAMINATE, ADHESIVE FILM, AND ELECTRONIC COMPONENT**

GASSPERRFILMLAMINAT, HAFTFILM UND ELEKTRONISCHES BAUTEIL

STRATIFIÉ DE FILMS BARRIÈRE AUX GAZ, FILM ADHÉSIF ET COMPOSANT ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2012 JP 2012049057**

(43) Date of publication of application:
**14.01.2015 Bulletin 2015/03**

(73) Proprietor: **LINTEC Corporation**
**Tokyo 173-0001 (JP)**

(72) Inventors:
- **KENMOCHI Suguru**
  **Tokyo 173-0001 (JP)**
- **NAGANAWA Satoshi**
  **Tokyo 173-0001 (JP)**
- **NAGAMOTO Koichi**
  **Tokyo 173-0001 (JP)**

(74) Representative: **Adam, Holger**
**Kraus & Weisert**
**Patentanwälte PartGmbB**
**Thomas-Wimmer-Ring 15**
**80539 München (DE)**

(56) References cited:
**EP-A1- 2 080 613** **EP-A1- 2 737 997**
**EP-A1- 2 740 777** **EP-A1- 2 774 755**
**WO-A1-2004/101276** **WO-A1-2010/021326**
**WO-A1-2010/107018** **WO-A1-2011/125602**
**WO-A1-2012/014814** **WO-A1-2012/023389**
**WO-A1-2013/015096** **WO-A1-2013/065812**
**JP-A- 2004 323 543** **JP-A- 2006 316 181**
**JP-A- 2008 249 901** **JP-A- 2011 026 361**
**JP-A- 2011 026 418** **JP-A- 2011 121 347**

EP 2 823 961 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The invention relates to a gas barrier film laminate that exhibits an excellent gas barrier capability, and includes at least two gas barrier films that are stacked through a pressure-sensitive adhesive layer, a pressure-sensitive adhesive film that is useful for producing the gas barrier film laminate, and an electronic member that includes the gas barrier film laminate.

BACKGROUND ART

Use of a transparent plastic film as a substrate for an electronic member (e.g., solar cell, liquid crystal display, or electroluminescence (EL) display) instead of a glass sheet (plate) has been studied in order to implement a reduction in thickness, a reduction in weight, flexibility, impact resistance, and the like.

However, a plastic film easily allows water vapor, oxygen, and the like to pass through as compared with a glass sheet, and may easily cause a deterioration in elements provided in an electronic member.

In order to solve the above problem, Patent Document 1 discloses a flexible display substrate in which a transparent gas barrier layer formed of a metal oxide is stacked on a transparent plastic film.

Patent Document 2 discloses a gas barrier laminate that includes a plastic film and a resin layer, the resin layer including a polyorganosilsesquioxane as the main component, and being stacked on at least one side of the plastic film.

Patent Document 3 discloses a transparent film in which a transparent gas barrier layer is formed on a first transparent plastic film base, and a second transparent plastic film base is provided on the transparent gas barrier layer through a transparent pressure-sensitive adhesive layer.

Among further prior art, EP 2 737 997 A1, EP 2 740 777 A1 and WO 2012/014814 A1 disclose gas barrier film laminates comprising a pressure-sensitive adhesive layer. Moreover, WO 2012/023389 A1 discloses a molding having a gas barrier layer, wherein said gas barrier layer has a surface layer configured of a material containing at least carbon atoms, oxygen atoms and silicon atoms. Moreover, WO 2011/125602 A1 discloses a molded object characterized by comprising a layer which comprises a polysilazane compound and a clay mineral and by having a specific water vapor transmission, wherein said molded object has excellent gas barrier properties, transparency and flex resistance. Furthermore, JP 2011-026418 A discloses an adhesive composition which exhibits excellent tack properties after crosslinking treatment, particularly excels in removability, does not cause lifting and peeling by heat treatment and high moisture treatment. Moreover, WO 2013/015096 A1 discloses a gas barrier film laminate, where at least two gas barrier films are laminated via an adhesive layer, the gas barrier film laminate being characterized in that at least one of the gas barrier films has a substrate formed from a plastic film and at leat one gas barrier layer disclosed on the substrate, and the adhesive layer is a layer formed using a rubber adhesive composition comprising a rubber compound.

RELATED-ART DOCUMENT

PATENT DOCUMENT

Patent Document 1: JP-A-2000-338901
Patent Document 2: JP-A-2006-123307
Patent Document 3: JP-A-2006-327098

SUMMARY OF THE INVENTION

TECHNICAL PROBLEM

Several gas barrier films have been proposed as described above.

The applicant of the present application proposed a formed article (gas barrier film) that includes a gas barrier layer that is formed of a material that includes an oxygen atom, a carbon atom, and a silicon atom (see WO2010/021326 and WO2010/107018, for example). The gas barrier films disclosed in these documents exhibit an excellent gas barrier capability.

The inventors of the invention conducted further studies in order to further improve the gas barrier capability, and invented a laminate in which at least two gas barrier films are stacked through a pressure-sensitive adhesive layer.

However, a laminate in which gas barrier films are bonded through a pressure-sensitive adhesive layer may

show a deterioration in external appearance due to air bubbles or the like when subjected to a high temperature and a high humidity for a long time.

The invention was conceived in view of the above situation. An object of the invention is to provide a gas barrier film laminate that exhibits an excellent gas barrier capability, and rarely shows a deterioration in external appearance (e.g., air bubbles) even when subjected to a high temperature and a high humidity for a long time, a pressure-sensitive adhesive film that is useful for producing the gas barrier film laminate, and an electronic member that includes the gas barrier film laminate.

SOLUTION TO PROBLEM

The inventors conducted extensive studies in order to achieve the above object.

As a result, the inventors found that (i) the gas barrier films disclosed in WO2010/021326, WO2010/107018, and the like exhibit an excellent gas barrier capability, but a small amount of water may pass through the gas barrier film, and enter the gas barrier film laminate when the gas barrier film laminate is subjected to a high temperature and a high humidity for a long time, (ii) it is difficult for water that has entered the gas barrier film laminate to be released to the outside due to the presence of the gas barrier film, and (iii) a gas barrier film laminate in which the hardness of the pressure-sensitive adhesive layer significantly decreases at a high temperature (i.e., a gas barrier film laminate that includes a pressure-sensitive adhesive layer having a shear load reduction ratio $\alpha$ (described later) of more than 70%) has a problem in which a small amount of water that has entered the gas barrier film laminate from the outside tends to remain in the pressure-sensitive adhesive layer, and air bubbles easily occur.

The inventors found based on the above findings that a gas barrier film laminate that includes a pressure-sensitive adhesive layer having a shear load reduction ratio $\alpha$ of 70% or less exhibits an excellent gas barrier capability, and rarely shows a deterioration in external appearance (e.g., air bubbles) even when subjected to a high temperature and a high humidity for a long time. These findings have led to the completion of the invention.

Several aspects of the invention provide the following gas barrier film laminate (see (1) to (5)), use of a pressure-sensitive adhesive film (see (6)), and electronic member (see (7)).

(1) A gas barrier film laminate including at least two gas barrier films, the gas barrier film laminate having a configuration in which two adjacent gas barrier films are stacked through a pressure-sensitive adhesive layer,
the gas barrier film including a base film, and at least one gas barrier layer that is provided on the base film,
the two adjacent gas barrier films being stacked so that the gas barrier layers face each other,
the gas barrier layer being a layer that is formed by implanting ions into a layer that includes a silicon-based polymer compound,
the pressure-sensitive adhesive layer being formed of an acrylic-based pressure-sensitive adhesive that includes an acrylic-based copolymer as a main component, the acrylic-based copolymer including a repeating unit derived from an acrylic-based monomer that includes a carboxyl group, and a repeating unit derived from an acrylic-based monomer that does not include a functional group, and
the pressure-sensitive adhesive layer having a shear load reduction ratio $\alpha$ (%) given by an expression (I) of 70% or less,

$$\alpha = \frac{(X-Y)}{X} \times 100 \qquad (I)$$

where, X is a shear load (N) (displacement in shear direction: 0.1 mm) measured when a specimen having a three-layer (polyethylene terephthalate film/pressure-sensitive adhesive layer/alkali-free glass) structure, and having an adhesion area of 225 $mm^2$ (15 $\times$15 mm) is subjected to a shear test at a temperature of 23°C, a relative humidity of 50%RH, and a shear rate of 0.1 mm/min, and Y is a shear load (N) (displacement in shear direction: 0.1 mm) measured when a specimen having a three-layer (polyethylene terephthalate film/pressure-sensitive adhesive layer/alkali-free glass) structure, and having an adhesion area of 225 $mm^2$ (15 $\times$ 15 mm) is subjected to a shear test at a temperature of 80°C and a shear rate of 0.1 mm/min.

(2) The gas barrier film laminate according to (1), wherein the acrylic-based copolymer has a weight average molecular weight of 100,000 to 1,000,000.
(3) The gas barrier film laminate according to (1), wherein the acrylic-based pressure-sensitive adhesive includes a crosslinking agent.
(4) The gas barrier film laminate according to (1), wherein the pressure-sensitive adhesive layer has a thickness of

0.5 to 100 μm.

(5) The gas barrier film laminate according to (1), wherein the gas barrier film has a water vapor transmission rate at a temperature of 40°C and a relative humidity of 90% of 0.00001 to 1.0 g/m$^2$/day.

(6) Use of a pressure-sensitive adhesive film for the production of a gas barrier film laminate that includes at least two gas barrier films, and has a configuration in which two adjacent gas barrier films are stacked through a pressure-sensitive adhesive layer, the pressure-sensitive adhesive film including at least a gas barrier film and a pressure-sensitive adhesive layer that are stacked adjacent to each other,

the gas barrier film including a base film, and at least one gas barrier layer that is provided on the base film,

the gas barrier layer of the gas barrier film and the pressure-sensitive adhesive layer being stacked adjacent to each other,

the gas barrier layer being a layer that is formed by implanting ions into a layer that includes a silicon-based polymer compound,

the pressure-sensitive adhesive layer being formed of an acrylic-based pressure-sensitive adhesive that includes an acrylic-based copolymer as a main component, the acrylic-based copolymer including a repeating unit derived from an acrylic-based monomer that includes a carboxyl group, and a repeating unit derived from an acrylic-based monomer that does not include a functional group, and

the pressure-sensitive adhesive layer having a shear load reduction ratio α (%) given by the expression (I) of 70% or less,

$$\alpha = \frac{(X-Y)}{X} \times 100 \qquad (I)$$

where, X is a shear load (N) (displacement in shear direction: 0.1 mm) measured when a specimen having a three-layer (polyethylene terephthalate film/pressure-sensitive adhesive layer/alkali-free glass) structure, and having an adhesion area of 225 mm$^2$ (15 ×15 mm) is subjected to a shear test at a temperature of 23°C, a relative humidity of 50%RH, and a shear rate of 0.1 mm/min, and Y is a shear load (N) (displacement in shear direction: 0.1 mm) measured when a specimen having a three-layer (polyethylene terephthalate film/pressure-sensitive adhesive layer/alkali-free glass) structure, and having an adhesion area of 225 mm$^2$ (15 ×15 mm) is subjected to a shear test at a temperature of 80°C and a shear rate of 0.1 mm/min.

(7) An electronic member including the gas barrier film laminate according to (1).

ADVANTAGEOUS EFFECTS OF THE INVENTION

The gas barrier film laminate according to one aspect of the invention exhibits an excellent gas barrier capability, and rarely shows a deterioration in external appearance (e.g., air bubbles) even when subjected to a high temperature and a high humidity for a long time.

The pressure-sensitive adhesive film according to one aspect of the invention is suitably used when producing the gas barrier film laminate.

The gas barrier film laminate according to one aspect of the invention is suitable as an electronic member for a solar cell, a liquid crystal display, or an electroluminescence (EL) display.

BRIEF DESCRIPTION OF DRAWINGS

FIG. 1 is a cross-sectional view illustrating the layer configuration of an example of a gas barrier film laminate according to one embodiment of the invention.

FIG. 2 is a cross-sectional view illustrating the layer configuration of an example of a gas barrier film laminate according to one embodiment of the invention.

FIG. 3 is a cross-sectional view illustrating a process that produces a gas barrier film laminate according to one embodiment of the invention.

FIGS. 4A and 4B are schematic views illustrating a specimen used when subjecting a pressure-sensitive adhesive layer to a shear test (see the examples).

DESCRIPTION OF EMBODIMENTS

A gas barrier film laminate, a pressure-sensitive adhesive film, and an electronic member according to several exemplary embodiments of the invention are described in detail below.

1) Gas barrier film laminate

A gas barrier film laminate according to the invention includes at least two gas barrier films, the gas barrier film laminate having a configuration in which two adjacent gas barrier films are stacked through a pressure-sensitive adhesive layer, and the pressure-sensitive adhesive layer having a shear load reduction ratio $\alpha$ (%) given by the expression (I) of 70% or less.

Gas barrier film

The gas barrier film laminate of the invention is a film that exhibits a capability to suppress transmission (penetration) of oxygen and water vapor (hereinafter may be referred to as "gas barrier capability").

The water vapor transmission rate of the gas barrier film at a temperature of 40°C and a relative humidity of 90% is preferably 1.0 $g/m^2/day$ or less, more preferably 0.00001 to 1.0 $g/m^2/day$, still more preferably 0.00001 to 0.5 $g/m^2/day$, and yet more preferably 0.00001 to 0.1 $g/m^2/day$.

A gas barrier film laminate that exhibits an excellent gas barrier capability can be obtained by utilizing a gas barrier film having a water vapor transmission rate of 1.0 $g/m^2/day$ or less. It is preferable that the lower limit of the water vapor transmission rate be as small as possible from the viewpoint of obtaining a gas barrier film laminate that rarely shows a deterioration in external appearance. Note that it is preferable to use a gas barrier film having a water vapor transmission rate at a temperature of 40°C and a relative humidity of 90% of 0.00001 $g/m^2/day$ or more since a significant effect can be achieved by utilizing the pressure-sensitive adhesive layer having a shear load reduction ratio $\alpha$ of 70% or less.

The water vapor transmission rate may be measured using a known gas transmission rate measurement apparatus.

The gas barrier film used in connection with one embodiment of the invention includes a base that is formed of a synthetic resin film (hereinafter may be referred to as "base film" or "base"), and at least one gas barrier layer that is provided on the base.

Base

Examples of a material for forming the base formed of a synthetic resin film include polyolefin-based resins such as polyethylene and polypropylene; styrene-based resins such as polystyrene; acrylic-based resins such as polymethyl methacrylate; amide-based resins such as a polyamide (e.g., nylon 6 and nylon 66), poly(m-phenyleneisophthalamide) and poly(p-phenyleneterephthalamide); polyester-based resins such as polyethylene terephthalate, polybutylene terephthalate, polyethylene naphthalate, and polyarylate; cycloolefin-based polymers such as a norbornene-based polymer, a monocyclic olefin-based polymer, a cyclic conjugated diene-based polymer, a vinyl alicyclic hydrocarbon polymer, and hydrogenated products thereof; polyimide; polyamideimide; polyphenylene ether; polyetherketone; polyether ether ketone; polycarbonate; polysulfone; polyether sulfone; polyphenylene sulfide; and combinations of two or more polymers among these polymers.

The base formed of a synthetic resin film may be a cured product of an energy ray-curable compound. Examples of the energy ray-curable compound include energy ray-polymerizable monomers such as polyfunctional acrylates such as 1,4-butanediol di(meth)acrylate, 1,6-hexanediol di(meth)acrylate, neopentyl glycol di(meth)acrylate, polyethylene glycol di(meth)acrylate, neopentyl glycol adipate di(meth)acrylate, dicyclopentanyl di(meth)acrylate, isocyanurate di(meth)acrylate, trimethylolpropane tri(meth)acrylate, dipentaerythritol tri(meth)acrylate, pentaerythritol tri(meth)acrylate, tris(acryloxyethyl) isocyanurate, and dipentaerythritol hexa(meth)acrylate; polyfunctional acrylate oligomers such as polyester (meth)acrylate, epoxy (meth)acrylate, urethane (meth)acrylate, polyol (meth)acrylate, and silicone (meth)acrylate. Note that the term "(meth)acrylate" refers to "acrylate" or "methacrylate".

Among these, polyester-based resins, polysulfone, polyether sulfone, polyphenylene sulfide, amide-based resins, and cycloolefin-based polymers are preferable, and polyester-based resins, polysulfone, polyether sulfone, polyphenylene sulfide, and cycloolefin-based polymers are more preferable due to excellent transparency and versatility.

The thickness of the base is normally 100 nm to 1000 $\mu m$, and preferably 5 to 200 $\mu m$.

## Gas barrier layer

The gas barrier layer included in the gas barrier film used in connection with one embodiment of the invention is a layer that exhibits a gas barrier capability.

The gas barrier layer may be formed on one side of the base formed of a synthetic resin film, or may be formed on each side of the base formed of a synthetic resin film. The gas barrier layer may be a single layer, or may be a layer in which a plurality of layers are stacked.

The material for forming the gas barrier layer suppresses transmission of oxygen and water vapor. It is preferable that the material for forming the gas barrier layer exhibit excellent transparency in addition to an excellent gas barrier capability.

The material for forming the gas barrier layer includes a silicon-based polymer compound.

The thickness of the gas barrier layer is not particularly limited, but is normally 20 nm to 50 μm, preferably 30 nm to 1 μm, and more preferably 40 to 500 nm.

It is preferable to form the gas barrier layer by subjecting a polymer layer formed of a silicon-based polymer compound to a plasma treatment since the desired gas barrier layer can be easily formed.

In particular, a method that implants ions into the surface of the silicon-based polymer layer is used, since a gas barrier layer that exhibits an excellent gas barrier capability can be easily and efficiently formed.

In this case, the term "gas barrier layer" does not refer to only the part modified by ion implantation, but refers to the polymer layer that includes the part modified by ion implantation.

The polymer compound that forms the polymer layer according to the invention includes silicon-based polymer compounds. Apart from the invention, polymer compounds such as polyolefin-based resins such as polyethylene and polypropylene; styrene-based resins such as polystyrene; acrylic-based resins such as polymethyl methacrylate; amide-based resins such as a polyamide (e.g., nylon 6 and nylon 66), poly(m-phenyleneisophthalamide) and poly(p-phenyleneterephthalamide); polyester-based resins such as polyethylene terephthalate, polybutylene terephthalate, polyethylene naphthalate, and polyarylate; cycloolefin-based polymers such as a norbornene-based polymer, a monocyclic olefin-based polymer, a cyclic conjugated diene-based polymer, a vinyl alicyclic hydrocarbon polymer, and hydrogenated products thereof; polyimide; polyamideimide; polyphenylene ether; polyetherketone; polyether ether ketone; polycarbonate; polysulfone; polyether sulfone; polyphenylene sulfide; and combinations of two or more polymers among these polymers have been used.

Note that the gas barrier layer formed of the polymer compound differs from the base formed of a synthetic resin film.

According to the invention, silicon-based polymer compounds are used since a gas barrier layer that exhibits an excellent gas barrier capability can be easily formed.

The silicon-based polymer compound may be either an organic compound or an inorganic compound as long as the silicon-based polymer compound is a polymer that includes silicon. Examples of the silicon-based polymer compound include a polyorganosiloxane-based compound, a polycarbosilane-based compound, a polysilane-based compound, and a polysilazane-based compound.

The polyorganosiloxane-based compound is obtained by polycondensing a silane compound that includes a hydrolyzable functional group.

The main chain structure of the polyorganosiloxane-based compound is not particularly limited. The main chain structure of the polyorganosiloxane-based compound may be linear, ladder-like, or polyhedral.

Examples of the linear main chain structure of the polyorganosiloxane compound include a structure represented by the following formula (a). Examples of the ladder-like main chain structure of the polyorganosiloxane compound include a structure represented by the following formula (b). Examples of the polyhedral main chain structure of the polyorganosiloxane compound include a structure represented by the following formula (c).

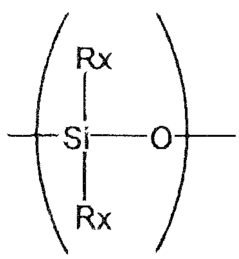

(a)

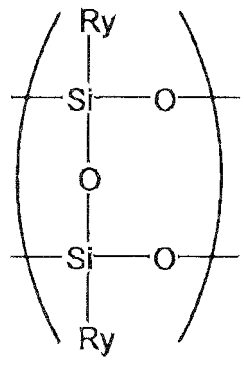

(b)

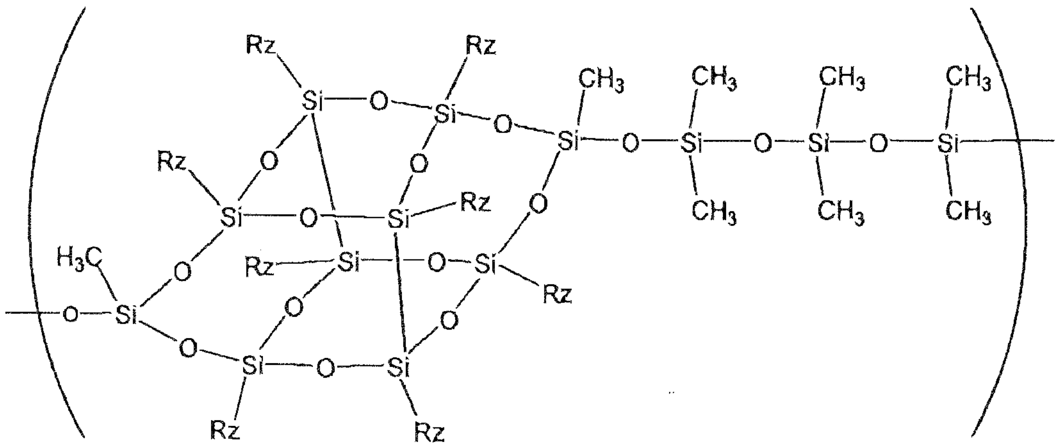

(c)

wherein Rx, Ry, and Rz are independently a hydrogen atom or a non-hydrolyzable group such as a substituted or unsubstituted alkyl group, a substituted or unsubstituted alkenyl group, or a substituted or unsubstituted aryl group. Note that a plurality of Rx in the formula (a), a plurality of Ry in the formula (b), and a plurality of Rz in the formula (c) may respectively be either identical or different, provided that a case where both Rx in the formula (a) are a hydrogen atom is excluded.

Examples of the unsubstituted alkyl group include alkyl groups having 1 to 10 carbon atoms (e.g., methyl group, ethyl group, n-propyl group, isopropyl group, n-butyl group, isobutyl group, sec-butyl group, t-butyl group, n-pentyl group, isopentyl group, neopentyl group, n-hexyl group, n-heptyl group, and n-octyl group).

Examples of the alkenyl group include alkenyl groups having 2 to 10 carbon atoms (e.g., vinyl group, 1-propenyl group, 2-propenyl group, 1-butenyl group, 2-butenyl group, and 3-butenyl group).

Examples of a substituent that may substitute the alkyl group and a substituent that may substitute the alkenyl group include halogen atoms such as a fluorine atom, a chlorine atom, a bromine atom, and an iodine atom; a hydroxyl group; a thiol group; an epoxy group; a glycidoxy group; a (meth)acryloyloxy group; substituted or unsubstituted aryl groups such as a phenyl group, a 4-methylphenyl group, and a 4-chlorophenyl group.

Examples of the unsubstituted aryl group include aryl groups having 6 to 10 carbon atoms (e.g., phenyl group, 1-naphthyl group, and 2-naphthyl group).

Examples of a substituent that may substitute the aryl group include halogen atoms such as a fluorine atom, a chlorine atom, a bromine atom, and an iodine atom; alkyl groups having 1 to 6 carbon atoms, such as a methyl group and an ethyl group; alkoxy groups having 1 to 6 carbon atoms, such as a methoxy group and an ethoxy group; a nitro group; a cyano group; a hydroxyl group; a thiol group; an epoxy group; a glycidoxy group; a (meth)acryloyloxy group; substituted or unsubstituted aryl groups such as a phenyl group, a 4-methylphenyl group, and a 4-chlorophenyl group.

Rx, Ry, and Rz are preferably a hydrogen atom, an alkyl group having 1 to 6 carbon atoms, or a phenyl group, and particularly preferably an alkyl group having 1 to 6 carbon atoms.

The polyorganosiloxane-based compound is preferably a linear compound represented by the formula (a), and more preferably a polydimethylsiloxane represented by the formula (a) in which both Rx are a methyl group, from the

viewpoint of availability and a capability to form a layer that exhibits an excellent gas barrier capability.

The polyorganosiloxane-based compound may be obtained using a known production method that polycondenses a silane compound that includes a hydrolyzable functional group, for example.

The silane compound used to produce the polyorganosiloxane-based compound may be appropriately selected depending on the structure of the desired polyorganosiloxane-based compound.

The term "polycarbosilane-based compound" used herein refers to a polymer compound that includes an -Si-C- bond in the main chain of the molecule. A compound that includes a repeating unit represented by the following formula (d) is preferable as the polycarbosilane-based compound.

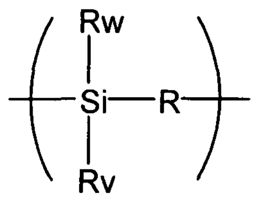

(d)

wherein Rw and Rv are independently a hydrogen atom, a hydroxyl group, an alkyl group, an aryl group, an alkenyl group, or a monovalent heterocyclic group, provided that a plurality of Rw and a plurality of Rv are respectively either identical or different.

Examples of the alkyl group, the aryl group, and the alkenyl group represented by Rw and Rv include those mentioned above in connection with Rx.

The heterocyclic ring of the monovalent heterocyclic group is not particularly limited as long as the heterocyclic ring is derived from a 3 to 10-membered cyclic compound that includes a carbon atom and at least one heteroatom (e.g., oxygen atom, nitrogen atom, or sulfur atom).

R is an alkylene group, an arylene group, or a divalent heterocyclic group.

Examples of the alkylene group represented by R include alkylene groups having 1 to 10 carbon atoms, such as a methylene group, an ethylene group, a propylene group, a trimethylene group, a tetramethylene group, a pentamethylene group, a hexamethylene group, and an octamethylene group.

Examples of the arylene group include arylene groups having 6 to 20 carbon atoms, such as a phenylene group, a 1,4-naphthylene group, and a 2,5-naphthylene group.

The divalent heterocyclic group is not particularly limited as long as the divalent heterocyclic group is a divalent group derived from a 3 to 10-membered cyclic compound that includes a carbon atom and at least one heteroatom (e.g., oxygen atom, nitrogen atom, or sulfur atom).

The alkylene group, the arylene group, and the divalent heterocyclic group represented by R may be substituted with a substituent (e.g., alkyl group, aryl group, alkoxy group, or halogen atom) at an arbitrary position.

It is preferable to use a polycarbosilane-based compound that includes the repeating unit represented by the formula (d) in which Rw and Rv are independently a hydrogen atom, an alkyl group, or an aryl group, and R is an alkylene group or an arylene group. It is more preferable to use a polycarbosilane-based compound that includes the repeating unit represented by the formula (d) in which Rw and Rv are independently a hydrogen atom or an alkyl group, and R is an alkylene group.

The weight average molecular weight of the polycarbosilane-based compound that includes the repeating unit represented by the formula (d) is normally 400 to 12,000.

The polycarbosilane-based compound may be produced using an arbitrary known method.

The term "polysilane-based compound" used herein refers to a polymer compound that includes an -Si-Si- bond in the molecule. Examples of the polysilane-based compound include a compound that includes at least one repeating unit selected from structural units represented by the following formula (e).

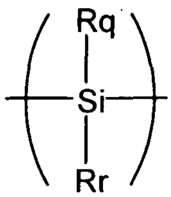

(e)

wherein Rq and Rr are independently a hydrogen atom, an alkenyl group, a cycloalkyl group, a cycloalkenyl group, an aryl group, a hydroxyl group, an alkoxy group, a cycloalkyloxy group, an aryloxy group, an aralkyloxy group, a substituted or unsubstituted amino group, a silyl group, or a halogen atom.

Examples of the alkyl group, the alkenyl group, and the aryl group represented by Rq and Rr include those mentioned above in connection with Rx.

Examples of the cycloalkyl group include cycloalkyl groups having 3 to 10 carbon atoms, such as a cyclopentyl group, a cyclohexyl group, and a methylcyclohexyl group.

Examples of the cycloalkenyl group include cycloalkenyl groups having 4 to 10 carbon atoms, such as a cyclopentenyl group and a cyclohexenyl group.

Examples of the alkoxy group include alkoxy groups having 1 to 10 carbon atoms, such as a methoxy group, an ethoxy group, a propoxy group, an isopropoxy group, a butoxy group, a t-butoxy group, and a pentyloxy group.

Examples of the cycloalkyloxy group include cycloalkyloxy groups having 3 to 10 carbon atoms, such as a cyclopenthyloxy group and a cyclohexyloxy group.

Examples of the aryloxy group include aryloxy groups having 6 to 20 carbon atoms, such as a phenoxy group and a naphthyloxy group.

Examples of the aralkyloxy group include aralkyloxy groups having 7 to 20 carbon atoms, such as a benzyloxy group, a phenethyloxy group, and a phenylpropyloxy group.

Examples of the substituted or unsubstituted amino group include an amino group; N-monosubstituted or N,N-disubstituted amino groups substituted with an alkyl group, a cycloalkyl group, an aryl group, an aralkyl group, or an acyl group.

Examples of the silyl group include $Si_{1-10}$ silanyl groups (preferably $Si_{1-6}$ silanyl groups) such as a silyl group, a disilanyl group, and a trisilanyl group, substituted silyl groups (e.g., a substituted silyl group substituted with an alkyl group, a cycloalkyl group, an aryl group, an aralkyl group, and an alkoxy group).

Examples of the halogen atom include a fluorine atom, a chlorine atom, a bromine atom, and an iodine atom.

The cycloalkyl group, the cycloalkenyl group, the alkoxy group, the cycloalkyloxy group, the aryloxy group, the aralkyloxy group, and the silyl group may be substituted with a substituent (e.g., halogen atom, alkyl group, aryl group, or alkoxy group).

It is preferable to use a polysilane-based compound that includes the repeating unit represented by the formula (e), more preferably a polysilane-based compound that includes the repeating unit represented by the formula (e) in which Rq and Rr are independently a hydrogen atom, a hydroxyl group, an alkyl group, an aryl group, an alkoxy group, an amino group, or a silyl group, and still more preferably a polysilane-based compound that includes the repeating unit represented by the formula (e) in which Rq and Rr are independently a hydrogen atom, an alkyl group, or an aryl group, since more excellent effects can be obtained.

The configuration of the polysilane-based compound is not particularly limited. The polysilane-based compound may be a homopolymer (e.g., noncyclic polysilane (e.g., linear polysilane, branched polysilane, or network polysilane) or cyclic polysilane), or may be a copolymer (e.g., random copolymer, block copolymer, alternating copolymer, or comb-like copolymer).

When the polysilane-based compound is a noncyclic polysilane, examples for the end group (terminal substituent) of the polysilane-based compound include a hydrogen atom, a halogen atom (e.g., chlorine atom), an alkyl group, a hydroxyl group, an alkoxy group, and a silyl group.

Specific examples of the polysilane-based compound include homopolymers such as a polydialkylsilane such as polydimethylsilane, poly(methylpropylsilane), poly(methylbutylsilane), poly(methylpentylsilane), poly(dibutylsilane), and poly(dihexylsilane), a polydiarylsilane such as poly(diphenylsilane), and a poly(alkylarylsilane) such as poly(methylphenylsilane); copolymers such as a copolymer of a dialkylsilane and another dialkylsilane (e.g., dimethylsilane-methylhexylsilane copolymer), an arylsilane-alkylarylsilane copolymer (e.g., phenylsilane-methylphenylsilane copolymer), and a dialkylsilane-alkylarylsilane copolymer (e.g., dimethylsilane-methylphenylsilane copolymer, dimethylsilane-phenylhexylsilane copolymer, dimethylsilane-methylnaphthylsilane copolymer, and methylpropylsilane-methylphenylsilane copolymer); and the like.

The average degree of polymerization (e.g., number average degree of polymerization) of the polysilane-based compound is normally about 5 to about 400, preferably about 10 to about 350, and more preferably about 20 to about 300.

The weight average molecular weight of the polysilane-based compound is about 300 to about 100,000, preferably about 400 to about 50,000, and more preferably about 500 to about 30,000.

A number of polysilane-based compounds are known in the art. Such polysilane-based compounds may be produced using a known method.

The term "polysilazane-based compound" used herein refers to a polymer compound that includes an -Si-N- bond in the molecule. The polysilazane-based compound is preferably a compound that includes a repeating unit represented by the following formula (f).

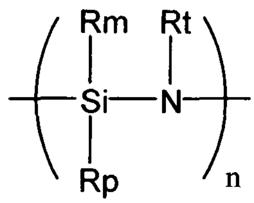

(f)

The number average molecular weight of the polysilazane-based compound is not particularly limited, but is preferably 100 to 50,000.

In the formula (f), n is an arbitrary natural number.

Rm, Rp, and Rt are independently a non-hydrolyzable group (e.g., hydrogen atom, alkyl group, cycloalkyl group, alkenyl group, aryl group, or alkylsilyl group).

Examples of the alkyl group, the alkenyl group, and the aryl group include those mentioned above in connection with Rx.

Examples of the cycloalkyl group include those mentioned above in connection with Rq.

Examples of the alkylsilyl group include a trimethylsilyl group, a triethylsilyl group, a triisopropylsilyl group, a tri-t-butylsilyl group, a methyldiethylsilyl group, a dimethylsilyl group, a diethylsilyl group, a methylsilyl group, and an ethylsilyl group.

Among these, a hydrogen atom, an alkyl group having 1 to 6 carbon atoms, or a phenyl group is preferable as Rm, Rp, and Rt. A hydrogen atom is particularly preferable as Rm, Rp, and Rt.

The polysilazane-based compound that includes the repeating unit represented by the formula (f) may be an inorganic polysilazane in which each of Rm, Rp, and Rt is a hydrogen atom, or an organic polysilazane in which at least one of Rm, Rp, and Rt is not a hydrogen atom.

Examples of the inorganic polysilazane include a perhydropolysilazane that has a linear structure that includes a repeating unit represented by the following formula, has a molecular weight of 690 to 2000, and includes three to ten $SiH_3$ groups in one molecule (see JP-B-63-16325),

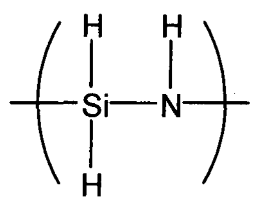

a perhydropolysilazane that has a linear structure and a branched structure, and includes a repeating unit represented by the following formula (A),

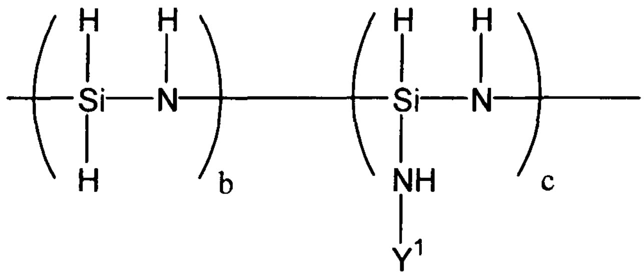

(A)

wherein b and c are arbitrary natural numbers, and $Y^1$ represents a hydrogen atom or a group represented by the following formula (B),

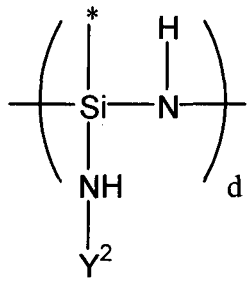

(B)

wherein d is an arbitrary natural number, * is a bonding position, and $Y^2$ is a hydrogen atom or a group represented by the formula (B), such as a perhydropolysilazane that has a linear structure, a branched structure, and a cyclic structure in its molecule, and an example includes the perhydropolysilazane structure represented by the following formula (C),

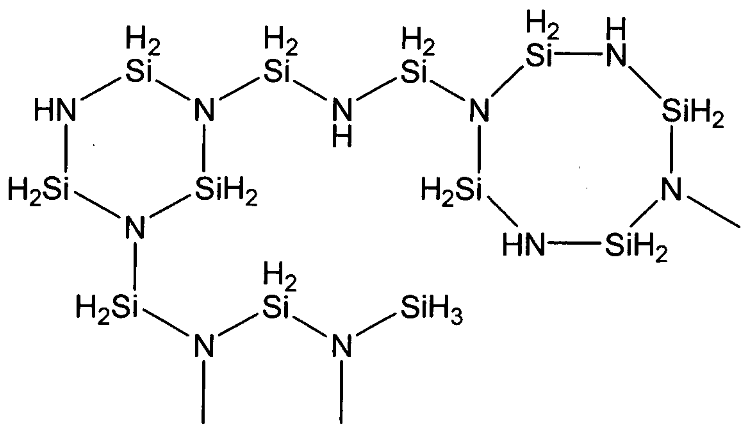

(C)

Examples of the organic polysilazane include:

(i) a polysilazane that includes a repeating unit represented by -(Rm'SiHNH)- (wherein Rm' is an alkyl group, a cycloalkyl group, an alkenyl group, an aryl group, or an alkylsilyl group similar to those represented by Rm (hereinafter the same)), and has a cyclic structure having a degree of polymerization of 3 to 5;
(ii) a polysilazane that includes a repeating unit represented by -(Rm'SiHNRt')-(wherein Rt' is an alkyl group, a cycloalkyl group, an alkenyl group, an aryl group, or an alkylsilyl group similar to those represented by Rt), and has a cyclic structure having a degree of polymerization of 3 to 5;
(iii) a polysilazane that includes a repeating unit represented by -(Rm'Rp'SiNH)-(wherein Rp' is an alkyl group, a cycloalkyl group, an alkenyl group, an aryl group, or an alkylsilyl group similar to those represented by Rp), and has a cyclic structure having a degree of polymerization of 3 to 5;
(iv) a polyorgano(hydro)silazane that includes a structure represented by the following formula in the molecule;

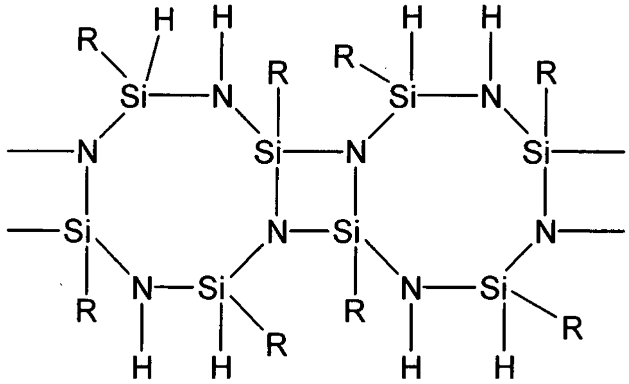

R =$CH_3$

(v) a polysilazane that includes a repeating unit represented by the following formula,

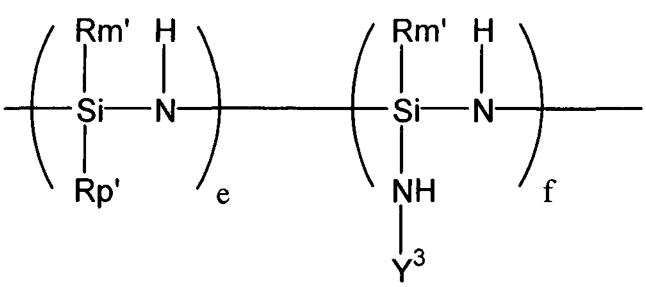

wherein Rm' and Rp' are the same as defined above, e and f are arbitrary natural numbers, and $Y^3$ is a hydrogen atom or a group represented by the following formula (D),

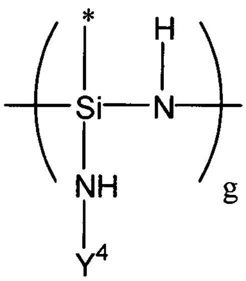

(D)

wherein g is an arbitrary natural number, * indicates the bonding position, and $Y^4$ is a hydrogen atom or the group represented by the formula (D).

The above organic polysilazanes may be produced using a known method. For example, the above organic polysilazanes may be produced by reacting ammonia or a primary amine with a reaction product of a secondary amine and a substituted or unsubstituted halogenosilane compound represented by the following formula.

$$R^1_{4-m}SiX_m$$

wherein m is 2 or 3, X is a halogen atom, and $R^1$ is a substituent that substitutes Rm, Rp, Rt, Rm', Rp', or Rt',

The secondary amine, ammonia, and the primary amine may be appropriately selected depending on the structure of the target polysilazane-based compound.

The modified polysilazane disclosed in JP-A-62-195024, JP-A-2-84437, JP-A-63-81122, JP-A-1-138108, JP-A-2-175726, JP-A-5-238827, JP-A-5-238827, JP-A-6-122852, JP-A-6-306329, JP-A-6-299118, JP-A-9-31333, JP-A-5-345826, JP-A-4-63833, or the like may be used as the polysilazane-based compound.

The polysilazane-based compound used in connection with one embodiment of the invention is preferably an inorganic polysilazane in which each of Rm, Rp, and Rt is a hydrogen atom, or an organic polysilazane in which at least one of Rm, Rp, and Rt is not a hydrogen atom, and more preferably an inorganic polysilazane from the viewpoint of

availability and a capability to form an implanted layer that exhibits an excellent gas barrier capability.

A product commercially available as a glass coating material or the like may be used directly as the polysilazane-based compound.

The polymer layer may include an additional component other than the polymer compound as long as the object of the invention is not impaired. Examples of the additional component include a curing agent, an additional polymer, an aging preventive, a light stabilizer, a flame retardant, and the like.

The content of the polymer compound in the polymer layer is preferably 50 mass% or more, and more preferably 70 mass% or more, from the viewpoint of forming a gas barrier layer that exhibits an excellent gas barrier capability,

The polymer layer may be formed by applying a layer-forming solution that includes at least one polymer compound, an optional additional component, a solvent, and the like to the base or a primer layer optionally formed on the base using a known coating method, and appropriately drying the resulting film, for example.

A spin coater, a knife coater, a gravure coater, or the like may be used to apply the layer-forming solution.

It is preferable to heat the resulting film in order to dry the film, and improve the gas barrier capability of the film. The film may be heated and dried using a known drying method such as hot-air drying, heat roll drying, or infrared irradiation. The heating temperature is normally 80 to 150°C, and the heating time is normally several tens of seconds to several tens of minutes.

The thickness of the polymer layer is not particularly limited, but is normally 20 to 1000 nm, preferably 30 to 500 nm, and more preferably 40 to 200 nm.

According to one embodiment of the invention, a film that exhibits a sufficient gas barrier capability can be obtained by implanting ions as described below, even when the polymer layer has a thickness at a nanometer level.

The dose of ions implanted into the polymer layer may be appropriately determined taking account of the intended use of the resulting film (e.g., desired gas barrier capability and transparency), and the like.

Examples of the ions implanted into the polymer layer include ions of a rare gas such as argon, helium, neon, krypton, or xenon; ions of a fluorocarbon, hydrogen, nitrogen, oxygen, carbon dioxide, chlorine, fluorine, sulfur, or the like; ions of an alkane gas such as methane, ethane, propane, butane, pentane, and hexane; ions of an alkene gas such as ethylene, propylene, butene, and pentene; ions of an alkadiene gas such as pentadiene and butadiene; ions of an alkyne gas such as acetylene and methyl acetylene; ions of an aromatic hydrocarbon gas such as benzene, toluene, xylene, indene, naphthalene, and phenanthrene; ions of a cycloalkane gas such as cyclopropane and cyclohexane; ions of a cycloalkene gas such as cyclopentene and cyclohexene; ions of conductive metals such as gold, silver, copper, platinum, nickel, palladium, chromium, titanium, molybdenum, niobium, tantalum, tungsten, and aluminum; ions of silane ($SiH_4$) or an organosilicon compound; and the like.

Examples of the organosilicon compound include tetraalkoxysilanes such as tetramethoxysilane, tetraethoxysilane, tetra-n-propoxysilane, tetraisopropoxysilane, tetra-n-butoxysilane, and tetra-t-butoxysilane; substituted or unsubstituted alkylalkoxysilanes such as dimethyldimethoxysilane, dimethyldiethoxysilane, diethyldimethoxysilane, methyltriethoxysilane, ethyltrimethoxysilane, and (3,33-trifluoropropyl)trimethoxysilane; arylalkoxysilanes such as diphenyldimethoxysilane and phenyltriethoxysilane; disiloxanes such as hexamethyldisiloxane (HMDSO); aminosilanes such as bis(dimethylamino)dimethylsilane, bis(dimethylamino)methylvinylsilane, bis(ethylamino)dimethylsilane, diethylaminotrimethylsilane, dimethylaminodimethylsilane, tetrakisdimethylaminosilane, and tris(dimethylamino)silane; silazanes such as hexamethyldisilazane, hexamethylcyclotrisilazane, heptamethyldisilazane, nonamethyltrisilazane, octamethylcyclotetrasilazane, and tetramethyldisilazane; cyanatosilanes such as tetraisocyanatosilane; halogenosilanes such as triethoxyfluorosilane; alkenylsilanes such as diallyldimethylsilane and allyltrimethylsilane; substituted or unsubstituted alkylsilanes such as di-t-butylsilane, 1,3-disilabutane, bis(trimethylsilyl)methane, tetramethylsilane, tris(trimethylsilyl)methane, tris(trimethylsilyl)silane, and benzyltrimethylsilane; silylalkynes such as bis(trimethylsilyl)acetylene, trimethylsilylacetylene, and 1-(trimethylsilyl)-1-propyne; silylalkenes such as 1,4-bistrimethylsilyl-1,3-butadiyne and cyclopentadienyltrimethylsilane; arylalkylsilanes such as phenyldimethylsilane and phenyltrimethylsilane; alkynylalkylsilanes such as propargyltrimethylsilane; alkenylalkylsilanes such as vinyltrimethylsilane;
disilanes such as hexamethyldisilane; siloxanes such as octamethylcyclotetrasiloxane, tetramethylcyclotetrasiloxane, and hexamethylcyclotetrasiloxane; N,O-bis(trimethylsilyl)acetamide; bis(trimethylsilyl)carbodiimide; and the like.

These compounds (ions) may be used either alone or in combination.

It is preferable to use ions of at least one element selected from the group consisting of hydrogen, nitrogen, oxygen, argon, helium, neon, xenon, and krypton from the viewpoint of ease of implantation and a capability to form a gas barrier layer that exhibits a particularly excellent gas barrier capability,

The ions may be implanted using an arbitrary method, For example, the ions may be implanted by applying ions (ion beams) accelerated by an electric field, implanting ions present in plasma (plasma ion implantation method), or the like. It is preferable to use the plasma ion implantation method since a gas barrier film can be easily obtained.

It is preferable to use a plasma ion implantation method (A) that implants ions present in plasma generated by utilizing an external electric field into the surface area of the polymer layer, or a plasma ion implantation method (B) that implants ions present in plasma generated due to an electric field produced by applying a negative high-voltage pulse

to the polymer layer into the surface area of the polymer layer.

When using the plasma ion implantation method (A), it is preferable to set the ion implantation pressure (plasma ion implantation pressure) to 0.01 to 1 Pa. When the ion implantation pressure is within the above range, ions can be easily, efficiently, and uniformly implanted, and the desired gas barrier layer can be efficiently formed.

The plasma ion implantation method (B) has advantages in that it is unnecessary to increase the degree of decompression, the operation is simple, and the processing time can be significantly reduced. Moreover, the entire silicate layer can be uniformly processed, and ions present in the plasma can be continuously implanted into the surface area of the silicate layer with high energy when applying a negative high-voltage pulse, The method (B) also has an advantage in that an excellent ion-implanted layer can be uniformly formed in the surface area of the polysilazane compound-containing layer by merely applying a negative high-voltage pulse to the polysilazane compound-containing layer without requiring a special means such as a high-frequency power supply (e.g., radio frequency (RF) power supply or microwave power supply).

When using the plasma ion implantation method (A) or (B), the pulse width when applying a negative high-voltage pulse (i.e., during ion implantation) is preferably 1 to 15 μsec. When the pulse width is within the above range, ions can be easily, efficiently, and uniformly implanted.

The applied voltage when generating plasma is preferably -1 to -50 kV, more preferably -1 to -30 kV, and particularly preferably -5 to -20 kV. If the applied voltage is higher than -1 kV, the ion implantation dose may be insufficient, and the desired performance may not be obtained. If the applied voltage is lower than -50 kV, the film may be charged during ion implantation, or coloration or the like of the film may occur.

Examples of the ion species used for plasma ion implantation include those mentioned above.

A plasma ion implantation apparatus is used when implanting ions present in plasma into the surface area of the polymer layer.

Specific examples of the plasma ion implantation apparatus include (α) a plasma ion implantation apparatus that causes the polymer layer (hereinafter may be referred to as "ion implantation target layer") to be evenly enclosed by plasma by superimposing high-frequency electric power on a feed-through that applies a negative high-voltage pulse to the ion implantation target layer so that ions present in the plasma are attracted to and collide with the target, and thereby implanted and deposited therein (JP-A-2001-26887), (β) a plasma ion implantation apparatus that includes an antenna in a chamber, wherein high-frequency electric power is applied to generate plasma, and positive and negative pulses are alternately applied to the ion implantation target layer after the plasma has reached an area around the ion implantation target layer, so that ions present in the plasma are attracted to and implanted into the target while heating the ion implantation target layer, causing electrons present in the plasma to be attracted to and collide with the target due to the positive pulse, and applying the negative pulse while controlling the temperature by controlling the pulse factor (JP-A-2001-156013), (γ) a plasma ion implantation apparatus that generates plasma using an external electric field utilizing a high-frequency electric power supply such as a microwave power supply, and causes ions present in the plasma to be attracted to and implanted into the target by applying a high-voltage pulse, (δ) a plasma ion implantation apparatus that implants ions present in plasma generated due to an electric field produced by applying a high-voltage pulse without using an external electric field, and the like.

It is preferable to use the plasma ion implantation apparatus (γ) or (δ) since the plasma ion implantation apparatus (γ) or (δ) allows a simple operation, significantly reduces the treatment time, and can be continuously used.

Examples of a method that utilizes the plasma ion implantation apparatus (γ) or (δ) include the method disclosed in WO2010/021326.

Since the plasma ion implantation apparatus (γ) or (δ) is configured so that the high-voltage pulse power supply is used as a plasma generation means that generates plasma, plasma can be generated, and ions present in the plasma can be continuously implanted into the surface area of the polymer layer by merely applying a negative high-voltage pulse to the polymer layer without requiring a special means such as a high-frequency power supply (e,g., RF power supply or microwave power supply), and a gas barrier film in which a polymer layer having a surface area modified by ion implantation (i.e., gas barrier layer) is formed can be mass-produced.

The thickness of the ion implantation target area may be controlled by adjusting the implantation conditions (e.g., type of ions, applied voltage, and implantation time), and may be determined depending on the thickness of the polymer layer, the intended use of the gas barrier film, and the like. The thickness of the ion implantation target area is normally 10 to 1000 nm.

Whether or not ions have been implanted may be determined by performing elemental analysis on the surface area of the polymer layer up to a depth of about 10 nm using X-ray photoelectron spectroscopy (XPS).

Pressure-sensitive adhesive layer

The gas barrier film laminate of the invention includes at least two gas barrier films, the gas barrier film laminate having a configuration in which two adjacent gas barrier films are stacked through the pressure-sensitive adhesive layer,

and the pressure-sensitive adhesive layer having a shear load reduction ratio α (%) given by the expression (I) of 70% or less.

$$\alpha = \frac{(X-Y)}{X} \times 100 \qquad (I)$$

where, X is the shear load (N) (displacement in shear direction: 0.1 mm) measured when a specimen having a three-layer (polyethylene terephthalate film/pressure-sensitive adhesive layer/alkali-free glass) structure, and having an adhesion area of 225 $mm^2$ (15 × 15 mm) is subjected to a shear test at a temperature of 23°C, a relative humidity of 50%RH, and a shear rate of 0.1 mm/min.

Y is the shear load (N) (displacement in shear direction: 0.1 mm) measured when a specimen having a three-layer (polyethylene terephthalate film/pressure-sensitive adhesive layer/alkali-free glass) structure, and having an adhesion area of 225 $mm^2$ (15 ×15 mm) is subjected to a shear test at a temperature of 80°C and a shear rate of 0.1 mm/min.

Specifically, the shear load reduction ratio α is a value that represents the change ratio of the hardness of the pressure-sensitive adhesive layer at a temperature of 23°C and a relative humidity of 50%RH, and the hardness of the pressure-sensitive adhesive layer at a temperature of 80°C. For example, when the hardness of the pressure-sensitive adhesive layer at a temperature of 80°C does not change with respect to the hardness of the pressure-sensitive adhesive layer at a temperature of 23°C, the shear load reduction ratio α is 0%.

The shear load reduction ratio α is 70% or less, preferably 1 to 60%, and more preferably 5 to 50%,

The gas barrier film laminate according to one embodiment of the invention rarely shows a deterioration in external appearance (e.g., air bubbles) even when subjected to a high temperature and a high humidity for a long time, since the pressure-sensitive adhesive layer has a shear load reduction ratio α (%) given by the expression (I) of 70% or less.

As described later in connection with the examples, the gas barrier film laminate including the pressure-sensitive adhesive layer having a shear load reduction ratio α of more than 70% showed a deterioration in external appearance (air bubbles) when subjected to a high temperature and a high humidity for a long time, This phenomenon occurred for the reason described above (see (iii)),

Therefore, it suffices that the hardness of the pressure-sensitive adhesive layer decrease to only a small extent at a high temperature in order to obtain a gas barrier film laminate that rarely shows a deterioration in external appearance (air bubbles) even when subjected to a high temperature and a high humidity for a long time, The configuration and the composition of the pressure-sensitive adhesive are not particularly limited as long as a pressure-sensitive adhesive layer having the above properties can be formed.

Note that the shear load X in the expression (I) is preferably 5.0 to 50 N, and more preferably 7.0 to 50 N. Since a pressure-sensitive adhesive layer that is designed so that the shear load X is 5.0 N or more exhibits sufficient adhesion, a gas barrier film laminate in which two adjacent gas barrier films are rarely separated (delaminated) can be obtained by utilizing such a pressure-sensitive adhesive layer.

The shear load Y is preferably 2.0 to 30 N, more preferably 5.0 to 30 N, and still more preferably 6.0 to 30 N. Since a pressure-sensitive adhesive layer that is designed so that the shear load Y is 2.0 N or more exhibits sufficient adhesion even when subjected to a high temperature and a high humidity for a long time, a gas barrier film laminate in which two adjacent gas barrier films are rarely separated (delaminated) even under such conditions can be obtained by utilizing such a pressure-sensitive adhesive layer.

The thickness of the pressure-sensitive adhesive layer is not particularly limited, and may be appropriately selected. The thickness of the pressure-sensitive adhesive layer is preferably 0.5 to 100 μm, more preferably 1 to 60 μm, and still more preferably 3 to 40 μm. When the thickness of the pressure-sensitive adhesive layer is 0.5 μm or more, excellent adhesion can be obtained. When the thickness of the pressure-sensitive adhesive layer is 100 μm or less, it is advantageous from the viewpoint of productivity.

The pressure-sensitive adhesive used in the gas barrier film laminate of the invention is an acrylic-based pressure-sensitive adhesive.
In this respect, an acrylic-based pressure-sensitive adhesive is preferable from the viewpoint of adhesion and handling capability. It is preferable to use a pressure-sensitive adhesive that can form a crosslinked structure (described later) since the shear load reduction ratio α can be easily decreased.

The acrylic-based pressure-sensitive adhesive is a pressure-sensitive adhesive that includes an acrylic-based copolymer as the main component.

The acrylic-based copolymer is a copolymer that includes a repeating unit derived from (meth)acrylic acid or a (meth)acrylate.

Note that the term "(meth)acrylic acid" used herein refers to acrylic acid or methacrylic acid, and the term

"(meth)acrylate" used herein refers to an acrylate or a methacrylate.

The acrylic-based copolymer may include a repeating unit other than the repeating unit derived from (meth)acrylic acid or a (meth)acrylate as long as the advantageous effects of the invention are not impaired.

According to the invention, the acrylic-based copolymer includes a repeating unit derived from an acrylic-based monomer that includes a functional group that can form a crosslinked structure (hereinafter may be referred to as "functional group"), and a repeating unit derived from an acrylic-based monomer that does not include the functional group. The repeating unit derived from the acrylic-based monomer that includes the functional group contributes to formation of a crosslinked structure in the pressure-sensitive adhesive layer, and the repeating unit derived from the acrylic-based monomer that does not include the functional group contributes to an improvement in adhesion of the pressure-sensitive adhesive layer.

According to the invention, the functional group is a carboxyl group since it is possible to form a pressure-sensitive adhesive layer having a small shear load reduction ratio.

It is preferable that the repeating unit derived from the acrylic-based monomer that does not include the functional group be derived from an alkyl (meth)acrylate that includes a hydrocarbon group having 4 to 10 carbon atom, since a pressure-sensitive adhesive layer that exhibits excellent adhesion can be formed.

The weight average molecular weight of the acrylic-based copolymer is normally 100,000 to 1,000,000, and preferably 300,000 to 900,000. When the weight average molecular weight of the acrylic-based copolymer is within the above range, it is possible to easily form a pressure-sensitive adhesive layer having a small shear load reduction ratio $\alpha$.

The weight average molecular weight can be adjusted by adjusting the amount of initiator, or adding a chain transfer agent.

Note that the weight average molecular weight of the acrylic-based copolymer refers to a polystyrene-reduced weight average molecular weight determined by gel permeation chromatography (GPC).

These acrylic-based copolymers may be used either alone or in combination when preparing the acrylic-based pressure-sensitive adhesive.

The acrylic-based copolymer may be produced using an arbitrary method. A known method such as a solution polymerization method, an emulsion polymerization method, a suspension polymerization method, or a bulk polymerization method may be used. It is preferable to use a solution polymerization method due to ease of polymerization.

Preferably, the monomers used to produce the acrylic-based copolymer include, besides the acrylic-based monomer that includes the functional group, and the acrylic-based monomer that does not include the functional group, an additional monomer that is copolymerizable with these monomers.

According to the invention, an acrylic-based monomer that includes a carboxyl group, such as (meth)acrylic acid and 2-carboxyethyl (meth)acrylate is used, and (meth)acrylic acid is preferable, since it is possible to form a pressure-sensitive adhesive layer having a small shear load reduction ratio $\alpha$.

These monomers may be used either alone or in combination.

The content of the repeating unit derived from the acrylic-based monomer that includes the functional group in the acrylic-based copolymer is preferably 1 to 40 mass%, and more preferably 3 to 15 mass%, based on the total repeating units.

Examples of the acrylic-based monomer that does not include the functional group include an acrylic-based monomer that includes an alkyl group, such as methyl (meth)acrylate, ethyl (meth)acrylate, propyl (meth)acrylate, butyl (meth)acrylate, pentyl (meth)acrylate, hexyl (meth)acrylate, octyl (meth)acrylate, decyl (meth)acrylate, dodecyl (meth)acrylate, myristyl (meth)acrylate, palmityl (meth)acrylate, stearyl (meth)acrylate, 2-ethylhexyl (meth)acrylate, and isooctyl (meth)acrylate; an acrylic-based monomer that includes a cycloalkyl group, such as cyclohexyl (meth)acrylate; and the like.

Among these, an alkyl (meth)acrylate that includes a hydrocarbon group having 4 to 10 carbon atoms is preferable, and butyl (meth)acrylate is more preferable, since a pressure-sensitive adhesive layer that exhibits excellent adhesion can be formed.

These monomers may be used either alone or in combination.

Examples of the additional monomer include a monomer that includes a carboxyl group, such as crotonic acid, maleic acid, fumaric acid, itaconic acid, and citraconic acid; a monomer that includes an amide group, such as (meth)acrylamide, N-methyl(meth)acrylamide, and N-methylol(meth)acrylamide; acrylonitrile; styrene; vinyl acetate; vinylpyrrolidone; and the like,

An initiator used for polymerization is not particularly limited. Examples of the initiator include a peroxide-based initiator such as benzoyl peroxide, lauroyl peroxide, and methyl ethyl ketone peroxide, an azo-based initiator such as azobisisobutyronitrile, azobiscyanovarelic acid, and azobiscyanopentane, and the like.

A solvent used for polymerization is not particularly limited. Examples of the solvent include toluene, hexane, heptane, ethyl acetate, acetone, methyl ethyl ketone, methanol, and the like.

Known polymerization conditions (e.g., polymerization temperature and polymerization time) may be employed.

A crosslinking agent may be added to the acrylic-based pressure-sensitive adhesive. The crosslinking agent

is a compound that reacts with the functional group to effect crosslinking. The crosslinking agent is not particularly limited. Examples of the crosslinking agent include an isocyanate-based crosslinking agent, an epoxy-based crosslinking agent, and the like, It is preferable to use an isocyanate-based crosslinking agent since it is possible to easily form a pressure-sensitive adhesive layer having a small shear load reduction ratio $\alpha$,

The isocyanate-based crosslinking agent is not particularly limited. A compound that includes two or more isocyanate groups in the molecule may be used as the isocyanate-based crosslinking agent, Examples of the isocyanate-based crosslinking agent include aromatic polyisocyanates such as tolylene diisocyanate, diphenylmethane diisocyanate, and xylylene diisocyanate, aliphatic polyisocyanates such as hexamethylenediisocyanate, alicyclic polyisocyanates such as isophorone diisocyanate and hydrogenated diphenylmethane diisocyanate, biuret types, isocyanurate types, and adducts (reaction products with a low-molecular-weight active hydrogen-containing compound (e,g., ethylene glycol, propylene glycol, neopentyl glycol, trimethylolpropane, or castor oil) thereof, and the like.

A compound that includes two or more epoxy groups in the molecule is used as the epoxy-based crosslinking agent. Examples of the epoxy-based crosslinking agent include sorbitol tetraglycidyl ether, trimethylolpropane glycidyl ether, tetraglycidyl-1,3-bisaminomethylcyclohexane, tetraglycidyl-m-xylenediamine, triglycidyl-p-aminophenol, and the like.

These crosslinking agents may be used either alone or in combination.

The crosslinking agent is normally used in an amount of 0,01 to 10 parts by mass, and preferably 0.05 to 5 parts by mass, based on 100 parts by mass of the acrylic-based copolymer.

The acrylic-based pressure-sensitive adhesive may include an additive as long as adhesion and the like are not impaired. Examples of the additive include a light stabilizer, an antioxidant, a tackifier, a plasticizer, a UV absorber, a coloring agent, a resin stabilizer, a filler, a pigment, an extender, an antistatic agent, a silane coupling agent, and the like. These additives may be used either alone or in combination.

The acrylic-based pressure-sensitive adhesive is preferably used as a solvent-based pressure-sensitive adhesive. The solvent is not particularly limited. A known solvent may be used.

The urethane-based pressure-sensitive adhesive is a pressure-sensitive adhesive that includes a urethane-based resin as the main component (including a case where the pressure-sensitive adhesive includes only the urethane-based resin), A urethane-based adhesive falls under the urethane-based pressure-sensitive adhesive.

The urethane-based pressure-sensitive adhesive is not particularly limited as long as the urethane-based pressure-sensitive adhesive can form a pressure-sensitive adhesive layer having the desired characteristics, A known urethane-based pressure-sensitive adhesive may be used.

Examples of the urethane-based resin include a polyether polyurethane, a polyester polyurethane, and the like.

These urethane-based resins are normally produced by subjecting a polyol (e.g., polyether polyol or polyester polyol) and a diisocyanate to a polyaddition reaction.

The diisocyanate is not particularly limited. Examples of the diisocyanate include aromatic diisocyanates such as 2,4-tolylene diisocyanate, 2,6-toluene diisocyanate, diphenylmethane-4,4'-diisocyanate (MDI), naphthalene-1,5-diisocyanate (NDI), and xylylene diisocyanate (XDI); aliphatic isocyanates such as 1,6-hexamethylene diisocyanate (HDI), dicyclohexylmethane-4,4'-diisocyanate (HMDI), 3-isocyanatomethyl-3,5,5-trimethylcyclohexyl isocyanate (IPDI), and 2,6-diisocyanatoethyl caproate (LDI); and the like.

These diisocyanates may be used either alone or in combination.

The urethane-based resin may have a three-dimensional crosslinked structure obtained by reacting a urethane prepolymer having a terminal isocyanate group with a crosslinking agent (e.g., triol or diamine).

The urethane-based pressure-sensitive adhesive may include an additive as long as adhesion and the like are not impaired. Examples of the additive include a light stabilizer, an antioxidant, a tackifier, a plasticizer, a UV absorber, a coloring agent, a resin stabilizer, a filler, a pigment, an extender, an antistatic agent, a silane coupling agent, and the like. These additives may be used either alone or in combination.

The urethane-based pressure-sensitive adhesive may be a solvent-free pressure-sensitive adhesive, a solvent-based pressure-sensitive adhesive, a hot melt pressure resistive adhesive, or the like.

The adhesion and the shear load reduction ratio $\alpha$ of the pressure-sensitive adhesive layer can be controlled by adjusting the type and the ratio of each repeating unit of the polymer used as the pressure-sensitive adhesive component (e.g., acrylic-based copolymer or urethane-based resin).

For example, when using the acrylic-based copolymer, the shear load reduction ratio $\alpha$ can be decreased while maintaining adhesion by moderately forming a crosslinked structure. The content of the repeating unit that includes the functional group is preferably 1 to 20 mass%, and more preferably 2 to 15 mass%, based on the total repeating units. When the content of the repeating unit that includes the functional group is within the above range, the gas barrier layer is not eroded, and the gas barrier capability can be maintained,

When using the urethane-based resin, the adhesion, the shear load reduction ratio $\alpha$, and the like of the pressure-sensitive adhesive layer can be controlled by adjusting the molecular weight and the crosslinked structure of the urethane-based resin. In particular, the shear load reduction ratio $\alpha$ can be decreased while maintaining adhesion

by moderately forming a three-dimensional crosslinked structure.

The pressure-sensitive adhesive layer may be formed using a known method taking account of the configuration of the pressure-sensitive adhesive. For example, when the pressure-sensitive adhesive is a solvent-based pressure-sensitive adhesive or an emulsion pressure-sensitive adhesive, the pressure-sensitive adhesive may be dissolved in an organic solvent such as toluene, ethyl acetate, or methyl ethyl ketone to prepare a pressure-sensitive adhesive layer-forming composition. The pressure-sensitive adhesive layer-forming composition may be applied using a known coating method (e.g., spin coating method, spray coating method, bar coating method, knife coating method, roll coating method, blade coating method, die coating method, or gravure coating method), and the solvent may be removed from the resulting film by drying, followed by optional heating to form a pressure-sensitive adhesive layer.

When the pressure-sensitive adhesive is a hot melt pressure resistive adhesive, the pressure-sensitive adhesive may be applied using a hot melt method utilizing a phenomenon in which the pressure-sensitive adhesive is easily melted due to heating to exhibit fluidity. The hot melt pressure resistive adhesive that has been melted may be applied using a known coating method using a T-die, a fountain die, a gear-in die, a slot die, or the like, and cooled to form a pressure-sensitive adhesive layer.

Gas barrier film laminate

The gas barrier film laminate according to the invention includes at least two gas barrier films, and has a configuration in which two adjacent gas barrier films are stacked through the pressure-sensitive adhesive layer.

A laminate in which gas barrier films are bonded through a pressure-sensitive adhesive layer may show a deterioration in external appearance due to air bubbles or the like when subjected to a high temperature and a high humidity for a long time (see above). This problem is considered to be peculiar to a laminate in which gas barrier films are bonded to each other.

Specifically, the laminate in which a glass sheet was used instead of the gas barrier film, and the pressure-sensitive adhesive layer of the comparative example (i.e., an experimental example in which the gas barrier film laminate showed a deterioration in external appearance) was used (i.e., a laminate having the layer configuration "glass sheet/pressure-sensitive adhesive layer (comparative example)/glass sheet) did not show a deterioration in external appearance when subjected to a high temperature and a high humidity for a long time.

The laminate in which a polyethylene terephthalate film (hereinafter may be referred to as "PET film") was used instead of the gas barrier film (i.e., a laminate having the layer configuration "PET film/pressure-sensitive adhesive layer (comparative example)/PET film) also did not show a deterioration in external appearance when subjected to a high temperature and a high humidity for a long time.

Since the glass sheet has a water vapor transmission rate as small as about 0.000001 $g/m^2/day$, it is considered that water entered the laminate to only a small extent when the glass sheet was used.

Since the PET film has a water vapor transmission rate of about 10 $g/m^2/day$, and allows water vapor to pass through as compared with the gas barrier film, it is considered that water that had entered the laminate was easily released to the outside when the PET film was used, and remained inside the laminate to only a small extent.

Specifically, a deterioration in external appearance occurs as a result of stacking at least two gas barrier films through a pressure-sensitive adhesive layer.

The embodiments of the invention prevent a deterioration in external appearance by utilizing the pressure-sensitive adhesive layer having the above properties in combination with at least two gas barrier films,

The number of gas barrier films included (stacked) in the gas barrier film laminate according to one embodiment of the invention is not particularly limited as long as the number of gas barrier films is 2 or more, The number of gas barrier films included (stacked) in the gas barrier film laminate is normally 2 to 5.

The gas barrier film laminate according to one embodiment of the invention may optionally include an additional layer such as a protective layer, a conductive layer, or a primer layer. The additional layer may be situated at an arbitrary position. The additional layer may be a single layer, or may include a plurality of identical or different layers.

The protective layer protects the gas barrier film laminate when an impact is applied to the gas barrier film laminate from the outside. It is preferable that the protective layer have high transparency and excellent scratch resistance.

The protective layer may be situated at an arbitrary position. It is preferable that the protective layer be situated as the outermost layer of the gas barrier film laminate.

A material for forming the protective layer is not particularly limited. The protective layer may be formed using an arbitrary known material. Examples of the material for forming the protective layer include silicon-containing compounds; polymerizable compositions that include a photopolymerizable compound that includes a photopolymerizable monomer and/or a photopolymerizable prepolymer, and an initiator that generates radicals at least due to light in the visible region; resins such as a polyester resin, a polyurethane resin (particularly a two-component curable resin that includes an isocyanate compound and a polyacryl polyol, a polyester polyol, a polyether polyol, or the like), an acrylic resin, a polycarbonate resin, a vinyl chloride/vinyl acetate copolymer, a polyvinyl butyral resin, and a nitrocellulose resin;

alkyl titanates; ethyleneimine; and the like. These materials may be used either alone or in combination.

The protective layer may be formed by dissolving or dispersing the above material in an appropriate solvent to prepare a protective layer-forming solution, applying the protective layer-forming solution to the target layer (i.e., a layer on which the protective layer to be formed) using a known method to form a film, drying the film, and optionally heating the dried film.

The protective layer-forming solution may be applied using a normal wet coating method. Examples of the wet coating method include a dipping method, a roll coating method, a gravure coating method, a knife coating method, an air knife coating method, a roll knife coating method, a die coating method, a screen printing method, a spray coating method, a gravure offset method, and the like.

The film formed by applying the protective layer-forming solution may be dried by a known drying method such as hot-air drying, heat roll drying, or infrared irradiation. The thickness of the protective layer may be appropriately selected depending on the intended use of the gas barrier film laminate. The thickness of the protective layer is preferably 0.05 to 50 μm, more preferably 0.1 to 10 μm, and still more preferably 0.2 to 5 μm.

If the thickness of the protective layer is less than 0,05 μm, the protective layer may exhibit insufficient scratch resistance, If the thickness of the protective layer is more than 50 μm, curling may easily occur due to strain during curing.

The conductive layer is a layer that exhibits conductivity. Examples of a material for forming the conductive layer include metals, alloys, metal oxides, electrically conductive compounds, mixtures thereof, and the like. Specific examples of the material for forming the conductive layer include antimony-doped tin oxide (ATO); fluorine-doped tin oxide (FTO); conductive metal oxides such as tin oxide, zinc oxide, indium oxide, indium tin oxide (ITO), and indium zinc oxide (IZO); metals such as gold, silver, chromium, and nickel; mixtures of these metals and conductive metal oxides; inorganic conductive materials such as copper iodide and copper sulfide; organic conductive materials such as polyaniline, polythiophene, and polypyrrole; and the like.

It is preferable to use a conductive metal oxide (particularly preferably ITO) as the material for forming the conductive layer from the viewpoint of transparency. The conductive layer may be a laminate that includes a plurality of layers formed of these materials.

The conductive layer may be formed by a deposition (evaporation) method, a sputtering method, an ion plating method, a thermal CVD method, a plasma CVD method, or the like. It is preferable to form the conductive layer using a sputtering method since the conductive layer can be easily formed.

When forming the conductive layer using a sputtering method, a discharge gas (e.g., argon) is introduced into a vacuum chamber. A high-frequency voltage or a direct-current voltage is applied between a target and a substrate to generate plasma, and the plasma is allowed to collide with the target so that the target material adheres to the substrate to obtain a thin film. The target is formed using the material for forming the conductive layer.

The thickness of the conductive layer may be appropriately selected taking account of the application and the like. The thickness of the conductive layer is normally 10 nm to 50 μm, and preferably 20 nm to 20 μm. The surface resistivity of the conductive layer is normally 1000 Ω/square or less.

The conductive layer may optionally be patterned. The conductive layer may be patterned by chemical etching (e.g., photolithography), physical etching using a laser or the like, a vacuum deposition method using a mask, a sputtering method using a mask, a lift-off method, a printing method, or the like.

The primer layer improves the interlayer adhesion between the base layer and the gas barrier layer (or another layer). The interlayer adhesion and the surface flatness can be improved by providing the primer layer.

A material for forming the primer layer is not particularly limited. The primer layer may be formed using an arbitrary known material. Examples of the material for forming the primer layer include silicon-containing compounds; polymerizable compositions that include a photopolymerizable compound that includes a photopolymerizable monomer and/or a photopolymerizable prepolymer, and an initiator that generates radicals at least due to light in the visible region; resins such as a polyester resin, a polyurethane resin (particularly a two-component curable resin that includes an isocyanate compound and a polyacryl polyol, a polyester polyol, a polyether polyol, or the like), an acrylic resin, a polycarbonate resin, a vinyl chloride/vinyl acetate copolymer, a polyvinyl butyral resin, and a nitrocellulose resin; alkyl titanates; ethyleneimine; and the like. These materials may be used either alone or in combination.

The primer layer may be formed by dissolving or dispersing the material for forming the primer layer in an appropriate solvent to prepare a primer layer-forming solution, applying the primer layer-forming solution to one side or each side of the base layer (or another layer), drying the resulting film, and optionally heating the dried film.

The primer layer-forming solution may be applied to the base layer (or another layer) using a normal wet coating method. Examples of the wet coating method include a dipping method, a roll coating method, a gravure coating method, a knife coating method, an air knife coating method, a roll knife coating method, a die coating method, a screen printing method, a spray coating method, a gravure offset method, and the like.

The film formed by applying the primer layer-forming solution may be dried by hot-air drying, heat roll drying, infrared irradiation, or the like. The thickness of the primer layer is normally 10 to 5000 nm, and preferably 20 to 4000 nm,

The layer configuration of the gas barrier film laminate according to one embodiment of the invention is not

particularly limited as long as the gas barrier film laminate includes at least two gas barrier films, and has a configuration in which two adjacent gas barrier films are stacked through the pressure-sensitive adhesive layer.

FIGS. 1 and 2 illustrate examples of the gas barrier film laminate according to one embodiment of the invention.

A gas barrier film laminate 100A illustrated in FIG. 1 (see (a)) has a layer configuration (base 1a/gas barrier layer 2a/pressure-sensitive adhesive layer 4/gas barrier layer 2b/base 1b) in which two adjacent gas barrier films are stacked through the pressure-sensitive adhesive layer 4 so that the gas barrier layer 2a and the gas barrier layer 2b face each other through the pressure-sensitive adhesive layer 4.

A gas barrier film laminate 100B illustrated in FIG. 1 (see (b)) has a layer configuration (base 1a/gas barrier layer 2a/pressure-sensitive adhesive layer 4/base 1b/gas barrier layer 2b) in which two adjacent gas barrier films are stacked through the pressure-sensitive adhesive layer 4 so that the gas barrier layer 2a and the base 1b face each other through the pressure-sensitive adhesive layer 4.

A gas barrier film laminate 100C illustrated in FIG. 1 (see (c)) has a layer configuration (gas barrier layer 2a/base 1a/pressure-sensitive adhesive layer 4/base 1b/gas barrier layer 2b) in which two adjacent gas barrier films are stacked through the pressure-sensitive adhesive layer 4 so that the base 1a and the base 1b face each other through the pressure-sensitive adhesive layer 4.

A gas barrier film laminate 100D illustrated in FIG. 2 (see (a)) includes three gas barrier films, and has a layer configuration (base 1a/gas barrier layer 2a/pressure-sensitive adhesive layer 4a/gas barrier layer 2b/base 1b/pressure-sensitive adhesive layer 4b/gas barrier layer 2c/base 1c) in which two adjacent gas barrier films are stacked through the pressure-sensitive adhesive layer 4a so that the gas barrier layer 2a and the gas barrier layer 2b face each other through the pressure-sensitive adhesive layer 4a, and an additional gas barrier film is stacked through the pressure-sensitive adhesive layer 4b so that the base 1b and the gas barrier layer 2c face each other through the pressure-sensitive adhesive layer 4b.

A gas barrier film laminate 100E illustrated in FIG. 2 (see (b)) includes three gas barrier films, and has a layer configuration (base 1a/gas barrier layer 2a/pressure-sensitive adhesive layer 4a/base 1b/gas barrier layer 1b/pressure-sensitive adhesive layer 4b/base 1c/gas barrier layer 2c) in which two adjacent gas barrier films are stacked through the pressure-sensitive adhesive layer 4a so that the gas barrier layer 2a and the base 1b face each other through the pressure-sensitive adhesive layer 4a, and the gas barrier layer 2b and the base 1c face each other through the pressure-sensitive adhesive layer 4b.

A gas barrier film laminate 100F illustrated in FIG. 2 (see (c)) includes three gas barrier films, and has a layer configuration (base 1a/gas barrier layer 2a/pressure-sensitive adhesive layer 4a/gas barrier layer 2b/base 1b/pressure-sensitive adhesive layer 4b/base 1c/gas barrier layer 2c) in which two adjacent gas barrier films are stacked through the pressure-sensitive adhesive layer 4a so that the gas barrier layer 2a and the gas barrier layer 2b face each other through the pressure-sensitive adhesive layer 4a, and an additional gas barrier film is stacked through the pressure-sensitive adhesive layer 4b so that the base 1b and the base 1c face each other through the pressure-sensitive adhesive layer 4b.

The gas barrier film laminate according to the invention has a configuration in which two adjacent gas barrier films are stacked so that the gas barrier layers face each other through the pressure-sensitive adhesive layer as illustrated in FIG. 1 (see (a)) and FIG. 2 (see (a) and (c)), since scratches or pinholes are rarely formed in the gas barrier layer, and a deterioration in gas barrier capability rarely occurs. It is preferable that the gas barrier film laminate according to one embodiment of the invention have a configuration in which the gas barrier layer is not situated on the outer side of the gas barrier film laminate, as illustrated in FIG. 1 (see (a)) and FIG. 2 (see (a)).

The adjacent gas barrier films may be stacked through the pressure-sensitive adhesive layer using an arbitrary method. For example, a known method may be employed.

For example, the gas barrier film laminate 100A illustrated in FIG. 1 (see (a)) having the layer configuration (base 1a/gas barrier layer 2a/pressure-sensitive adhesive layer 4/gas barrier layer 2b/base 1b) may be produced as described below.

As illustrated in FIG. 3, a gas barrier film 10 is provided that includes a base 1 formed of a synthetic resin film, and a gas barrier layer 2 that is provided on the base 1 (see (a)). Note that two gas barrier films 10a and 10b are provided.

A pressure-sensitive adhesive layer 4 is formed on a release film 3 to obtain a release film 20 provided with the pressure-sensitive adhesive layer (see (b) in FIG. 3). The release film 20 may include another release film on the pressure-sensitive adhesive layer 4.

The gas barrier layer 2a of the gas barrier film 10a is bonded to the pressure-sensitive adhesive layer 4 of the release film 20 with optional heating to obtain a pressure-sensitive adhesive film 30 (see (c) in FIG. 3). The gas barrier layer 2a may be bonded to the pressure-sensitive adhesive layer 4 using an arbitrary method. For example, the gas barrier layer 2a may be bonded to the pressure-sensitive adhesive layer 4 using a known laminator.

After removing the release film 3 of the pressure-sensitive adhesive film 30, the gas barrier layer 2b of the gas barrier film 10b is bonded to the exposed pressure-sensitive adhesive layer 4 (see (d) in FIG. 3) with optional heating to obtain the gas barrier film laminate 100A (see (e) in FIG. 3).

The gas barrier film laminate according to one embodiment of the invention may be produced using a method other than the above method. For example, a pressure-sensitive adhesive layer may be formed directly on the gas barrier layer 2 of the gas barrier film 10 illustrated in FIG. 3 (see (a)), and bonded to the other gas barrier film under pressure with optional heating to obtain a gas barrier film laminate.

The shape of the gas barrier film laminate according to one embodiment of the invention is not particularly limited as long as the gas barrier film laminate can be applied to an electronic member (described below). For example, the gas barrier film laminate may be in the shape of a sheet, a rectangular parallelepiped, a polygonal pillar, a tube, or the like,

Since the gas barrier film laminate according to one embodiment of the invention exhibits an excellent gas barrier capability, and rarely shows a deterioration in external appearance (e.g., air bubbles) even when subjected to a high temperature and a high humidity for a long time, the gas barrier film laminate is suitable as a display member such as a liquid crystal display member, an organic EL display member, an inorganic EL display member, and an electronic paper member.

2) Pressure-sensitive adhesive film

A pressure-sensitive adhesive film according to one embodiment of the invention is used to produce a gas barrier film laminate that includes at least two gas barrier films, and has a configuration in which two adjacent gas barrier films are stacked through a pressure-sensitive adhesive layer, the pressure-sensitive adhesive film including at least a gas barrier film and a pressure-sensitive adhesive layer that are stacked adjacent to each other, the pressure-sensitive adhesive layer having a shear load reduction ratio $\alpha$ (%) given by the expression (I) of 70% or less.

Examples of the pressure-sensitive adhesive layer included in the pressure-sensitive adhesive film according to one embodiment of the invention include the pressure-sensitive adhesive layer described above in connection with the gas barrier film laminate.

The pressure-sensitive adhesive film according to one embodiment of the invention may be the pressure-sensitive adhesive film 30 (see (c) in FIG. 3) in which the gas barrier layer 2a of the gas barrier film 10a and the pressure-sensitive adhesive layer 4 are stacked adjacent to each other.

The pressure-sensitive adhesive film according to one embodiment of the invention may have a configuration in which a release film is stacked on the pressure-sensitive adhesive layer 4, or may have a configuration in which a release film is not stacked on the pressure-sensitive adhesive layer 4 (i.e., a configuration in which the release film 3 has been removed from the pressure-sensitive adhesive film 30).

The pressure-sensitive adhesive film according to one embodiment of the invention may optionally include an additional layer such as a protective layer, a conductive layer, or a primer layer. Examples of the additional layer include those mentioned above in connection with the gas barrier film laminate. The additional layer may be situated at an arbitrary position. The additional layer may be a single layer, or may include a plurality of identical or different layers.

The pressure-sensitive adhesive film according to one embodiment of the invention is useful for producing the gas barrier film laminate according to one embodiment of the invention.

3) Electronic member

An electronic member according to one embodiment of the invention includes the gas barrier film laminate according to one embodiment of the invention. Examples of the electronic member include flexible substrates such as a liquid crystal display member, an organic EL display member, an inorganic EL display member, an electronic paper member, a solar cell member, and a thermoelectric conversion member.

Since the electronic member according to one embodiment of the invention includes the gas barrier film laminate according to one embodiment of the invention, a deterioration in device due to water vapor or the like rarely occurs, and the electronic member rarely shows a deterioration in external appearance (e.g., air bubbles) even when subjected to a high temperature and a high humidity for a long time.

EXAMPLES

The invention is further described below by way of examples.

(1) Preparation of pressure-sensitive adhesive composition

Preparation of pressure-sensitive adhesive composition A

100 parts by mass of an acrylic-based copolymer produced using butyl acrylate (BA) and acrylic acid (AA)

(mass ratio (BA:AA)=90:10, weight average molecular weight: 550,000) and 0.22 parts by mass of an isocyanate-based crosslinking agent ("BHS-8515" manufactured by Toyo Ink Mfg, Co., Ltd., concentration: 37.5 mass%) were mixed. The mixture was diluted with methyl ethyl ketone to prepare a pressure-sensitive adhesive composition A having a nonvolatile content of 30 mass%.

Preparation of pressure-sensitive adhesive composition B

100 parts by mass of an acrylic-based copolymer produced using butyl acrylate (BA), methyl acrylate (MA), and acrylic acid (AA) (mass ratio (BA:MA:AA)=76:20:4, weight average molecular weight: 800,000), 2 parts by mass of an isocyanate-based crosslinking agent ("BHS-8515" manufactured by Toyo Ink Mfg, Co., Ltd., concentration: 37.5 mass%), and 0.5 parts by mass of an epoxy-based crosslinking agent ("TC-5" manufactured by Taisei Kayaku Co., Ltd., concentration: 5 mass%) were mixed, The mixture was diluted with ethyl acetate to prepare a pressure-sensitive adhesive composition B having a nonvolatile content of 22 mass%.

Preparation of pressure-sensitive adhesive composition C

100 parts by mass of an acrylic-based copolymer produced using 2-ethylhexyl acrylate (2EHA), cyclohexyl acrylate (CHA), and 2-hydroxyethyl acrylate (HEA) (mass ratio (2EHA:CHA:HEA)=59.7:40:0.3, weight average molecular weight: 800,000) and 0.5 parts by mass of an isocyanate-based crosslinking agent ("BHS-8515" manufactured by Toyo Ink Mfg. Co., Ltd., concentration: 37.5 mass%) were mixed. The mixture was diluted with methyl ethyl ketone to prepare a pressure-sensitive adhesive composition C having a nonvolatile content of 30 mass%,

Preparation of pressure-sensitive adhesive composition D

100 parts by mass of an acrylic-based copolymer produced using butyl acrylate (BA) and acrylic acid (AAc) (mass ratio (BA:AAc)=90:10, weight average molecular weight: 400,000) and 0.5 parts by mass of an epoxy-based crosslinking agent ("TC-5" manufactured by Taisei Kayaku Co., Ltd., concentration: 5 mass%) were mixed. The mixture was diluted with methyl ethyl ketone to prepare a pressure-sensitive adhesive composition D having a nonvolatile content of 35 mass%.

Preparation of pressure-sensitive adhesive composition E

100 parts by mass of a polyisobutylene resin ("Oppanol B50" manufactured by BASF, weight average molecular weight: 340,000), 30 parts by mass of a polybutene resin ("Nisseki Polybutene Grade HV-1900" manufactured by Nippon Oil Corporation, weight average molecular weight: 1900), and 50 parts by mass of a cycloolefin-based polymer ("Elastotac H-100L Resin" manufactured by Eastman Chemical Company) were dissolved in toluene to obtain a rubber-based pressure-sensitive adhesive composition E having a nonvolatile content of about 18 mass%.

Production of gas barrier film

A polysilazane compound (a coating material including perhydropolysilazane as the main component ("Aquamika NL110-20" manufactured by Clariant Japan K.K.)) was spin-coated onto a polyethylene terephthalate film ("PET38T-100" manufactured by Mitsubishi Plastics Inc., thickness: 38 μm, hereinafter referred to as "PET film"), and heated at 120°C for 1 minute to form a polysilazane layer including perhydropolysilazane and having a thickness of 150 nm.

Argon (Ar) ions were implanted into the surface of the polysilazane layer under the following conditions using a plasma ion implantation apparatus to form a gas barrier layer to obtain a gas barrier film. The water vapor transmission rate of the gas barrier film at a temperature of 40°C and a relative humidity of 90% was 0.02 g/m$^2$/day. The water vapor transmission rate of the gas barrier film was measured using a gas transmission rate measurement device ("PERMATRAN" manufactured by MOCON (U.S.A)).

The details of the plasma ion implantation apparatus and the ion implantation conditions used to form the gas barrier layer are shown below,

Plasma ion implantation apparatus
RF power supply: "RF56000" manufactured by JEOL Ltd.
High-voltage pulsed power supply: "PV-3-HSHV-0835" manufactured by Kurita Seisakusho Co., Ltd.
Plasma ion implantation conditions
Plasma-generating gas: Ar

Gas flow rate: 100 sccm
Duty ratio: 0.5%
Applied voltage: -6 kV
RF power supply; frequency: 13.56 MHz, applied electric power: 1000 W
Chamber internal pressure: 0.2 Pa
Pulse width: 5 μsec
Ion implantation time: 200 sec

Example 1

The pressure-sensitive adhesive composition A was applied to the surface of a release layer of a release film in which a silicone release layer was provided on one side of a polyethylene terephthalate film having a thickness of 38 μm ("SP-PET381031" manufactured by Lintec Corporation) using a comma direct coating method, and dried at 100°C for 1 minute to form a pressure-sensitive adhesive layer having a thickness of about 10 μm to obtain a release film a provided with the pressure-sensitive adhesive layer, A release film in which a release layer was provided on one side of a polyethylene terephthalate film having a thickness of 38 μm ("SP-PFS50AL-5" manufactured by Lintec Corporation) was separately provided. The release layer of the release film and the pressure-sensitive adhesive layer of the release film a were bonded to obtain a release film A provided with the pressure-sensitive adhesive layer in which the release film was stacked on each side of the pressure-sensitive adhesive layer.

The gas barrier layer of the gas barrier film produced as described above was bonded to the surface of the pressure-sensitive adhesive layer of the release film A that was exposed by removing one of the release films.

The surface of the pressure-sensitive adhesive layer of the release film A that was exposed by removing the other release film was bonded to the gas barrier layer of another gas barrier film to produce a gas barrier film laminate A.

Example 2

A gas barrier film laminate B was produced in the same manner as in Example 1, except that a release film B provided with a pressure-sensitive adhesive layer that was prepared using the pressure-sensitive adhesive composition B instead of the pressure-sensitive adhesive composition A, was used.

Comparative Example 1

A gas barrier film laminate C was produced in the same manner as in Example 1, except that a release film C provided with a pressure-sensitive adhesive layer that was prepared using the pressure-sensitive adhesive composition C instead of the pressure-sensitive adhesive composition A, was used.

Comparative Example 2

A gas barrier film laminate D was produced in the same manner as in Example 1, except that a release film D provided with a pressure-sensitive adhesive layer that was prepared using the pressure-sensitive adhesive composition D instead of the pressure-sensitive adhesive composition A, was used.

Comparative Example 3

A gas barrier film laminate E was produced in the same manner as in Example 1, except that a release film E provided with a pressure-sensitive adhesive layer that was prepared using the pressure-sensitive adhesive composition E instead of the pressure-sensitive adhesive composition A, was used.

Example 3

The gas barrier layer of the gas barrier film produced as described above was bonded to a pressure-sensitive adhesive layer of a sheet provided with a pressure-sensitive adhesive layer in which a urethane-based pressure-sensitive adhesive layer was provided on a release film ("G-6" manufactured by Kurabo Industries, Ltd., thickness: 25 μm) using a heat laminator (lamination temperature: 120°C, speed: 0.24 m/min), and the release film was removed. The exposed urethane-based pressure-sensitive adhesive layer was bonded to the gas barrier layer of another gas barrier film using the heat laminator to produce a gas barrier film laminate F.

Comparative Example 4

A gas barrier film laminate G was produced in the same manner as in Example 3, except that a sheet provided with a pressure-sensitive adhesive layer in which an olefin-based pressure-sensitive adhesive layer was provided on a release film ("Z-2" manufactured by Kurabo Industries, Ltd., thickness: 25 μm) was used instead of the sheet provided with the urethane-based pressure-sensitive adhesive layer.

Shear test

A specimen was prepared as described below when subjecting the pressure-sensitive adhesive layer of the gas barrier film laminates of Examples 1 and 2 and Comparative Examples 1 to 3 to a shear test.

A polyethylene terephthalate film ("Cosmoshine PET188A4300" manufactured by Toyobo Co., Ltd., thickness: 188 μm) was bonded to each of the release films A to E. The resulting laminate was cut to have a width of 15 mm and a length of 100 mm to obtain a pressure-sensitive adhesive test film (thickness of pressure-sensitive adhesive layer: 30 μm). After removing the release film from the pressure-sensitive adhesive test film to expose the pressure-sensitive adhesive layer, the pressure-sensitive adhesive test film and alkali-free glass ("Eagle XG" manufactured by Coming) were bonded so that the adhesion area was 225 $mm^2$ (15×15 mm) (see FIG. 4), and a roll having a weight of 2 kg was reciprocated five times to obtain a specimen. Note that FIG. 4(a) is a top view illustrating the specimen, and FIG. 4(b) is a cross-sectional view taken along the X-Y plane in FIG. 4(a).

A specimen was prepared as described below when subjecting the pressure-sensitive adhesive layer of the gas barrier film laminates of Example 3 and Comparative Example 4 to the shear test.

A polyethylene terephthalate film ("Cosmoshine PET188A4300" manufactured by Toyobo Co., Ltd., thickness: 188 μm) was bonded to the pressure-sensitive adhesive layer of each sheet using a heat laminator (lamination temperature: 120°C, speed: 0.24 m/min). The resulting laminate was cut to have a width of 15 mm and a length of 100 mm to obtain a pressure-sensitive adhesive test film, After removing the release film from the test pressure-sensitive adhesive film to expose the pressure-sensitive adhesive layer, the test pressure-sensitive adhesive film and alkali-free glass ("Eagle XG" manufactured by Corning) were placed so that the adhesion area was 225 $mm^2$ (15×15 mm) (see FIG. 4), and bonded using the heat laminator to obtain a specimen.

The specimen was allowed to stand at a temperature of 23°C and a relative humidity of 50% for 24 hours. The specimen was placed on a tensile tester ("5581" manufactured by Instron) (i.e., the end of the alkali-free glass and the end of the pressure-sensitive adhesive test film were placed on the tensile tester), and the specimen was pulled in the horizontal direction (shear direction) at a 0.1 shear rate of 0.1 mm/min to measure the load. The shear load when the displacement in the shear direction was 0.1 mm was taken as the shear load X (N).

The shear test was also performed at a temperature of 80°C, and the shear load when the displacement in the shear direction was 0.1 mm was taken as the shear load Y (N).

The shear load reduction ratio α was calculated from the shear load X and the shear load Y using the following expression (I).

$$\alpha = \frac{(X-Y)}{X} \times 100 \qquad (I)$$

Evaluation of external appearance under high-temperature/high-humidity conditions

The gas barrier film laminates A to G obtained in Examples 1 to 3 and Comparative Examples 1 to 4 were cut to have dimensions of 120×120 mm, and subjected to high-temperature/high-humidity conditions (condition 1: 60°C and 90%RH, condition 2: 85°C and 85%RH) for 1000 hours, The gas barrier film laminate was then conditioned at a temperature of 23°C and a relative humidity of 50% for 1 day, and observed with the naked eye.

The gas barrier film laminate was evaluated in accordance with the following standard.

Acceptable: No air bubbles were observed in the gas barrier film laminate,
Unacceptable: Air bubbles were observed in the gas barrier film laminate. The evaluation results are shown in Table 1.

TABLE 1

| | | | Example | | | Comparative Example | | | |
|---|---|---|---|---|---|---|---|---|---|
| | | | 1 | 2 | 3 | 1 | 2 | 3 | 4 |
| Pressure-sensitive adhesive layer | Shear load (N) | X: 23°C, 50%RH | 12.5 | 15.3 | 20.3 | 9.9 | 7.8 | 17.3 | 22.9 |
| | | Y: 80°C | 6.5 | 8.6 | 8.5 | 2.8 | 2.3 | 4.5 | 5.7 |
| | Shear load reduction ratio $\alpha$ (%) | | 48 | 44 | 58 | 72 | 71 | 74 | 75 |
| Pressure-sensitive adhesive | | | Acrylic-based | Acrylic-based | Urethane-based | Acrylic-based | Acrylic-based | Rubber-based | Olefin-based |
| Acrylic-based pressure-sensitive adhesive | Monomers used to produce acrylic-based copolymer (parts by mass) | BA | 90 | 76 | - | - | 90 | - | - |
| | | AA | 10 | 4 | - | - | 10 | - | - |
| | | 2EHA | - | - | - | 59.7 | - | - | - |
| | | CHA | - | - | - | 40 | - | - | - |
| | | HEA | - | - | - | 0.3 | - | - | - |
| | | MA | - | 20 | - | - | - | - | - |
| | Crosslinking agent | | Isocyanate-based | Isocyanate-based/ epoxy-based | - | Isocyanate-based | Epoxy-based | - | - |
| External appearance under high-temperature/ high-humidity conditions | 60°C, 90%RH, 1000h | | Acceptable | Acceptable | Acceptable | Unacceptable | Acceptable | Unacceptable | Unacceptable |
| | 85°C, 85%RH, 1000h | | Acceptable | Acceptable | Acceptable | Unacceptable | Unacceptable | Unacceptable | Unacceptable |

The following were confirmed from the results shown in Table 1.

No air bubbles were observed in the gas barrier film laminates obtained in Examples 1 to 3 including the pressure-sensitive adhesive layer having a shear load reduction ratio of 70% or less, even when the gas barrier film laminates were subjected to high-temperature/high-humidity conditions.

In contrast, air bubbles were observed in the gas barrier film laminates obtained in Comparative Examples 1 to 4 including the pressure-sensitive adhesive layer having a shear load reduction ratio of more than 70%, when the gas barrier film laminates were subjected to high-temperature/high-humidity conditions.

REFERENCE SIGNS LIST

1, 1a, 1b, 1c: Base
2, 2a, 2b, 2c: Gas barrier layer
3: Release film
4, 4a, 4b: Pressure-sensitive adhesive layer
5: Alkali-free glass
6: Polyethylene terephthalate film
7: Pressure-sensitive adhesive layer
10, 10a, 10b: Gas barrier film
20: Release film provided with pressure-sensitive adhesive layer
30: Pressure-sensitive adhesive film
100A, 100B, 100C, 100D, 100E, 100F: Gas barrier film laminate

**Claims**

1. A gas barrier film laminate comprising at least two gas barrier films,
the gas barrier film laminate having a configuration in which two adjacent gas barrier films are stacked through a pressure-sensitive adhesive layer,
the gas barrier film including a base film, and at least one gas barrier layer that is provided on the base film,
the two adjacent gas barrier films being stacked so that the gas barrier layers face each other,
the gas barrier layer being a layer that is formed by implanting ions into a layer that includes a silicon-based polymer compound,
the pressure-sensitive adhesive layer being formed of an acrylic-based pressure-sensitive adhesive that includes an acrylic-based copolymer as a main component, the acrylic-based copolymer including a repeating unit derived from an acrylic-based monomer that includes a carboxyl group, and a repeating unit derived from an acrylic-based monomer that does not include a functional group, and
the pressure-sensitive adhesive layer having a shear load reduction ratio $\alpha$ (%) given by an expression (I) of 70% or less,

$$\alpha = \frac{(X-Y)}{X} \times 100 \qquad (I)$$

where, X is a shear load (N) (displacement in shear direction: 0.1 mm) measured when a specimen having a three-layer (polyethylene terephthalate film/pressure-sensitive adhesive layer/alkali-free glass) structure, and having an adhesion area of 225 $mm^2$ (15 × 15 mm) is subjected to a shear test at a temperature of 23°C, a relative humidity of 50%RH, and a shear rate of 0.1 mm/min, and Y is a shear load (N) (displacement in shear direction: 0.1 mm) measured when a specimen having a three-layer (polyethylene terephthalate film/pressure-sensitive adhesive layer/alkali-free glass) structure, and having an adhesion area of 225 $mm^2$ (15 × 15 mm) is subjected to a shear test at a temperature of 80°C and a shear rate of 0.1 mm/min.

2. The gas barrier film laminate according to claim 1, wherein the acrylic-based copolymer has a weight average molecular weight of 100,000 to 1,000,000.

3. The gas barrier film laminate according to claim 1, wherein the acrylic-based pressure-sensitive adhesive includes

a crosslinking agent.

4. The gas barrier film laminate according to claim 1, wherein the pressure-sensitive adhesive layer has a thickness of 0.5 to 100 μm.

5. The gas barrier film laminate according to claim 1, wherein each of the gas barrier films has a water vapor transmission rate at a temperature of 40°C and a relative humidity of 90% of 0.00001 to 1.0 g/m$^2$/day.

6. Use of a pressure-sensitive adhesive film for the production of a gas barrier film laminate that includes at least two gas barrier films, and has a configuration in which two adjacent gas barrier films are stacked through a pressure-sensitive adhesive layer, the pressure-sensitive adhesive film comprising at least a gas barrier film and a pressure-sensitive adhesive layer that are stacked adjacent to each other,
the gas barrier film including a base film, and at least one gas barrier layer that is provided on the base film,
the gas barrier layer of the gas barrier film and the pressure-sensitive adhesive layer being stacked adjacent to each other,
the gas barrier layer being a layer that is formed by implanting ions into a layer that includes a silicon-based polymer compound,
the pressure-sensitive adhesive layer being formed of an acrylic-based pressure-sensitive adhesive that includes an acrylic-based copolymer as a main component, the acrylic-based copolymer including a repeating unit derived from an acrylic-based monomer that includes a carboxyl group, and a repeating unit derived from an acrylic-based monomer that does not include a functional group, and
the pressure-sensitive adhesive layer having a shear load reduction ratio α (%) given by an expression (I) of 70% or less,

$$\alpha = \frac{(X-Y)}{X} \times 100 \qquad (I)$$

where, X is a shear load (N) (displacement in shear direction: 0.1 mm) measured when a specimen having a three-layer (polyethylene terephthalate film/pressure-sensitive adhesive layer/alkali-free glass) structure, and having an adhesion area of 225 mm$^2$ (15 × 15 mm) is subjected to a shear test at a temperature of 23°C, a relative humidity of 50%RH, and a shear rate of 0.1 mm/min, and Y is a shear load (N) (displacement in shear direction: 0.1 mm) measured when a specimen having a three-layer (polyethylene terephthalate film/pressure-sensitive adhesive layer/alkali-free glass) structure, and having an adhesion area of 225 mm$^2$ (15 × 15 mm) is subjected to a shear test at a temperature of 80°C and a shear rate of 0.1 mm/min.

7. An electronic member comprising the gas barrier film laminate according to claim 1.

**Patentansprüche**

1. Gassperrfilmlaminat, umfassend wenigstens zwei Gassperrfilme, wobei
das Gassperrfilmlaminat einen Aufbau hat, bei welchem zwei angrenzende Gassperrfilme durch eine druckempfindliche Klebeschicht gestapelt sind, wobei
der Gassperrfilm einen Basisfilm und wenigstens eine Gassperrschicht umfasst, die auf dem Basisfilm angeordnet ist, wobei die zwei angrenzenden Gassperrfilme so gestapelt sind, dass die Gassperrschichten einander gegenüber liegen, wobei die Gassperrschicht eine Schicht ist, die durch Implantieren von Ionen in eine Schicht, welche eine siliciumbasierte Polymerverbindung umfasst, gebildet ist,
die druckempfindliche Klebeschicht aus einem acrylbasierten druckempfindlichen Kleber gebildet ist, welcher ein acrylbasiertes Copolymer als Hauptkomponente umfasst, das acrylbasierte Copolymer eine Wiederholungseinheit, die aus einem acrylbasierten Monomer abgeleitet ist, welches eine Carboxylgruppe umfasst, und eine Wiederholungseinheit, die von einem acrylbasierten Monomer abgeleitet ist, das keine funktionelle Gruppe umfasst, umfasst, und
die druckempfindliche Klebeschicht ein Scherkraftreduktionsverhältnis α (%), dargestellt durch den Ausdruck (I), von 70% oder weniger aufweist

$$\alpha = \frac{(X - Y)}{X} \times 100 \qquad (I)$$

worin X die Scherkraft (N) (Verschiebung in Scherrichtung: 0,1 mm) ist, die gemessen wird, wenn eine Probe mit einer Dreischichtstruktur (Polyethylenterephthalatfilm/druckempfindliche Klebeschicht/alkalifreies Glas) und mit einer Klebefläche von 225 $mm^2$ (15x15 mm) einem Schertest bei einer Temperatur von 23°C, einer relativen Feuchte von 50% RF und einer Scherrate von 0,1 mm/min unterworfen wird, und Y eine Scherkraft (N) (Verschiebung in Scherrichtung: 0,1 mm) ist, die gemessen wird, wenn eine Probe mit einer Dreischichtstruktur (Polyethylenterephthalatfilm/druckempfindliche Klebeschicht/ alkalifreies Glas) und einer Klebefläche von 225 $mm^2$ (15x15 mm) einem Schertest bei einer Temperatur von 80°C und einer Scherrate von 0,1 mm/min unterworfen wird.

**2.** Gassperrfilmlaminat gemäß Anspruch 1, wobei das acrylbasierte Copolymer ein gewichtsmittleres Molekulargewicht von 100.000 bis 1.000.000 aufweist.

**3.** Gassperrfilmlaminat gemäß Anspruch 1, wobei der acrylbasierte druckempfindliche Kleber ein Vernetzungsmittel umfasst.

**4.** Gassperrfilmlaminat gemäß Anspruch 1, wobei die druckempfindliche Klebeschicht eine Dicke von 0,5 bis 100 μm aufweist.

**5.** Gassperrfilmlaminat gemäß Anspruch 1, wobei jeder der Gassperrfilme eine Wasserdampfdurchlässigkeitsrate bei einer Temperatur von 40°C und einer relativen Feuchtigkeit von 90% von 0,00001 bis 1,0 $g/m^2$/Tag aufweist.

**6.** Verwendung eines druckempfindlichen Klebefilms für die Herstellung eines Gassperrfilmlaminats, welches wenigstens zwei Gassperrfilme umfasst und einen Aufbau aufweist, bei welchem zwei angrenzende Gassperrfilme durch eine druckempfindliche Klebeschicht gestapelt sind, wobei der druckempfindliche Klebefilm wenigstens einen Gassperrfilm und eine druckempfindliche Klebeschicht, die aneinander angrenzend gestapelt sind, der Gassperrfilm einen Basisfilm und wenigstens eine Gassperrschicht umfasst, die auf dem Basisfilm angeordnet ist, die Gassperrschicht des Gassperrfilms und die druckempfindliche Klebeschicht aneinander angrenzend gestapelt sind, wobei die Gassperrschicht eine Schicht ist, die durch Implantieren von Ionen in eine Schicht, welche eine siliciumbasierte Polymerverbindung umfasst, gebildet ist,
die druckempfindliche Klebeschicht aus einem acrylbasierten druckempfindlichen Kleber gebildet ist, welcher ein acrylbasiertes Copolymer als Hauptkomponente umfasst, das acrylbasierte Copolymer eine Wiederholungseinheit, die aus einem acrylbasierten Monomer abgeleitet ist, welches eine Carboxylgruppe umfasst, und eine Wiederholungseinheit, die von einem acrylbasierten Monomer abgeleitet ist, das keine funktionelle Gruppe umfasst, umfasst, und
die druckempfindliche Klebeschicht ein Scherkraftreduktionsverhältnis α (%), dargestellt durch den Ausdruck (I), von 70% oder weniger aufweist

$$\alpha = \frac{(X - Y)}{X} \times 100 \qquad (I)$$

worin X die Scherkraft (N) (Verschiebung in Scherrichtung: 0,1 mm) ist, die gemessen wird, wenn eine Probe mit einer Dreischichtstruktur (Polyethylenterephthalatfilm/druckempfindliche Klebeschicht/alkalifreies Glas) und mit einer Klebefläche von 225 $mm^2$ (15x15 mm) einem Schertest bei einer Temperatur von 23°C, einer relativen Feuchte von 50% RF und einer Scherrate von 0,1 mm/min unterworfen wird, und Y eine Scherkraft (N) (Verschiebung in Scherrichtung: 0,1 mm) ist, die gemessen wird, wenn eine Probe mit einer Dreischichtstruktur (Polyethylenterephthalatfilm/druckempfindliche Klebeschicht/ alkalifreies Glas) und einer Klebefläche von 225 $mm^2$ (15x15 mm) einem Schertest bei einer Temperatur von 80°C und einer Scherrate von 0,1 mm/min unterworfen wird.

**7.** Elektronisches Bauteil, umfassend das Gassperrfilmlaminat gemäß Anspruch 1.

## Revendications

1. Stratifié de films de barrière contre les gaz comprenant au moins deux films de barrière contre les gaz,
le stratifié de films de barrière contre les gaz ayant une configuration dans laquelle deux films de barrière contre les gaz adjacents sont empilés par l'intermédiaire d'une couche d'adhésif sensible à la pression,
le film de barrière contre les gaz incluant un film de base, et au moins une couche de barrière contre les gaz qui est fournie sur le film de base,
les deux films de barrière contre les gaz adjacents étant empilés de façon à ce que les couches de barrière contre les gaz soient l'une en face de l'autre,
la couche de barrière contre les gaz étant une couche qui est formée par l'implantation d'ions dans une couche qui inclut un composé de polymère à base de silicium,
la couche d'adhésif sensible à la pression étant formée d'un adhésif sensible à la pression à base d'acrylique qui inclut un copolymère à base d'acrylique en tant que composant principal, le copolymère à base d'acrylique incluant un motif répétitif dérivé d'un monomère à base d'acrylique qui inclut un groupe carboxyle, et un motif répétitif dérivé d'un monomère à base d'acrylique qui n'inclut pas un groupe fonctionnel, et
la couche d'adhésif sensible à la pression présentant un taux de réduction de charge de cisaillement $\alpha$ (%) donné par une expression (I) de 70 % ou moins,

$$\alpha = \frac{(X-Y)}{X} \times 100 \qquad (I)$$

où, X est une charge de cisaillement (N) (déplacement dans la direction de cisaillement : 0,1 mm) mesurée quand un échantillon ayant une structure à trois couches (film de polytéréphtalate d'éthylène/couche d'adhésif sensible à la pression/verre exempt d'alcalin), et présentant une surface d'adhérence de 225 $mm^2$ (15 x 15 mm) est soumis à un test de cisaillement à une température de 23 °C, une humidité relative de 50 % HR, et un taux de cisaillement de 0,1 mm/min, et Y est une charge de cisaillement (N) (déplacement dans la direction de cisaillement : 0,1 mm) mesurée quand un échantillon ayant une structure à trois couches (film de polytéréphtalate d'éthylène/couche d'adhésif sensible à la pression/verre exempt d'alcalin), et présentant une surface d'adhérence de 225 $mm^2$ (15 x 15 mm) est soumis à un test de cisaillement à une température de 80 °C et un taux de cisaillement de 0,1 mm/min,

2. Stratifié de films de barrière contre les gaz selon la revendication 1, dans lequel le copolymère à base d'acrylique présente un poids moléculaire moyen en poids de 100 000 à 1 000 000.

3. Stratifié de films de barrière contre les gaz selon la revendication 1, dans lequel l'adhésif sensible à la pression à base d'acrylique inclut un agent de réticulation.

4. Stratifié de films de barrière contre les gaz selon la revendication 1, dans lequel la couche d'adhésif sensible à la pression présente une épaisseur de 0,5 à 100 $\mu$m.

5. Stratifié de films de barrière contre les gaz selon la revendication 1, dans lequel chacun des films de barrière contre les gaz présente un taux de transmission de vapeur d'eau à une température de 40 °C et une humidité relative de 90 % de 0,00001 à 1,0 g/$m^2$/jour.

6. Utilisation d'un film adhésif sensible à la pression pour la production d'un stratifié de films de barrière contre les gaz qui inclut au moins deux films de barrière contre les gaz, et présente une configuration dans laquelle deux films de barrière contre les gaz adjacents sont empilés par l'intermédiaire d'une couche d'adhésif sensible à la pression, le film adhésif sensible à la pression comprenant au moins un film de barrière contre les gaz et une couche d'adhésif sensible à la pression qui sont empilés adjacents l'un à l'autre,
le film de barrière contre les gaz incluant un film de base, et au moins une couche de barrière contre les gaz qui est fournie sur le film de base,
la couche de barrière contre les gaz du film de barrière contre les gaz et la couche d'adhésif sensible à la pression étant empilées adjacentes l'une à l'autre,
la couche de barrière contre les gaz étant une couche qui est formée par l'implantation d'ions dans une couche qui inclut un composé de polymère à base de silicium,
la couche d'adhésif sensible à la pression étant formée d'un adhésif sensible à la pression à base d'acrylique qui inclut un copolymère à base d'acrylique en tant que composant principal, le copolymère à base d'acrylique incluant

un motif répétitif dérivé d'un monomère à base d'acrylique qui inclut un groupe carboxyle, et un motif répétitif dérivé d'un monomère à base d'acrylique qui n'inclut pas un groupe fonctionnel, et
la couche d'adhésif sensible à la pression présentant un taux de réduction de charge de cisaillement $\alpha$ (%) donné par une expression (I) de 70 % ou moins,

$$\alpha = \frac{(X-Y)}{X} \times 100 \qquad (I)$$

où, X est une charge de cisaillement (N) (déplacement dans la direction de cisaillement : 0,1 mm) mesurée quand un échantillon ayant une structure à trois couches (film de polytéréphtalate d'éthylène/couche d'adhésif sensible à la pression/verre exempt d'alcalin), et présentant une surface d'adhérence de 225 $mm^2$ (15 x 15 mm) est soumis à un test de cisaillement à une température de 23 °C, une humidité relative de 50 % HR, et un taux de cisaillement de 0,1 mm/min, et Y est une charge de cisaillement (N) (déplacement dans la direction de cisaillement : 0,1 mm) mesurée quand un échantillon ayant une structure à trois couches (film de polytéréphtalate d'éthylène/couche d'adhésif sensible à la pression/verre exempt d'alcalin), et présentant une surface d'adhérence de 225 $mm^2$ (15 x 15 mm) est soumis à un test de cisaillement à une température de 80 °C et un taux de cisaillement de 0,1 mm/min,

**7.** Élément électronique comprenant le stratifié de films de barrière contre les gaz selon la revendication 1.

Fig.1

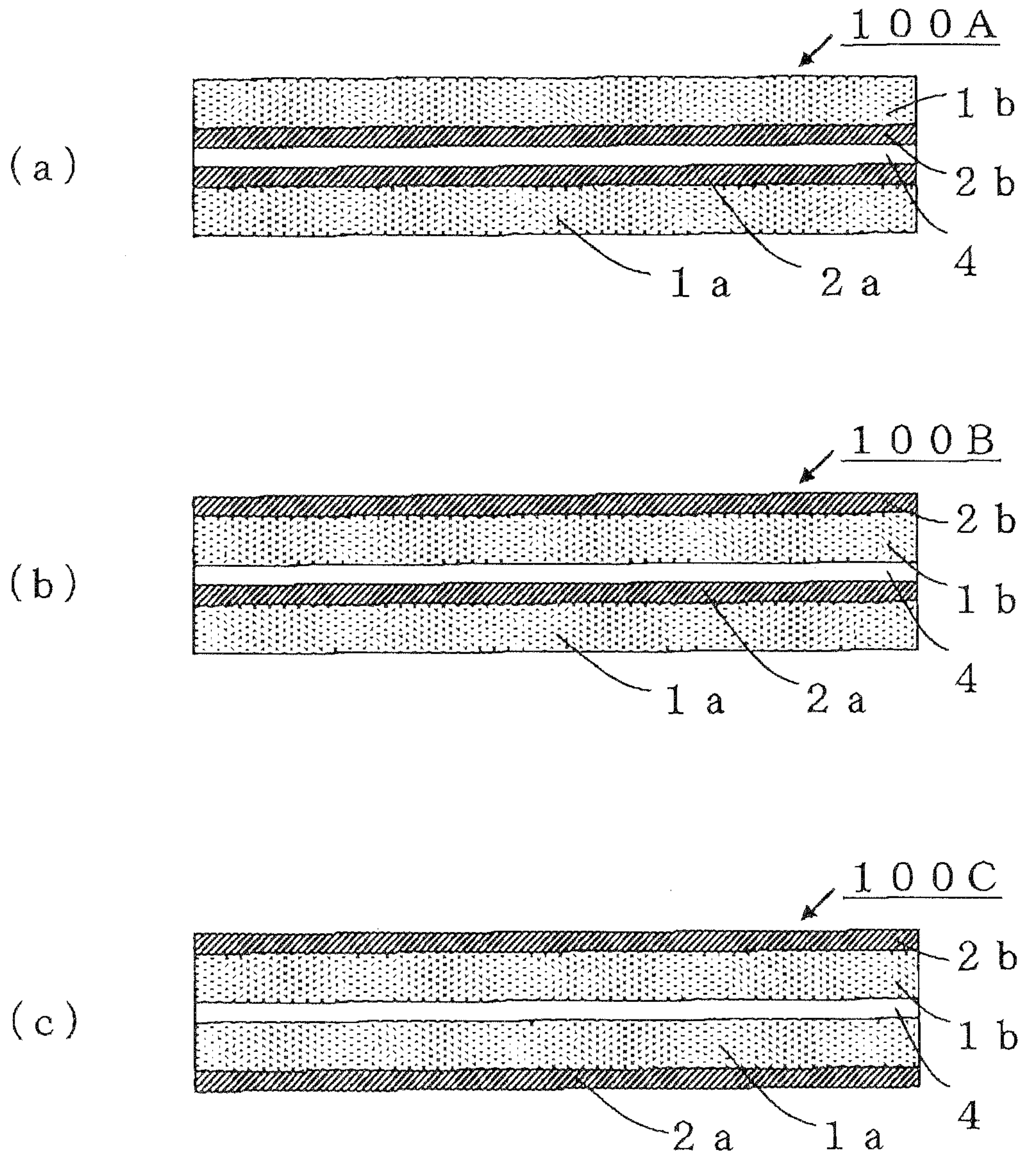

Fig.2

(a)

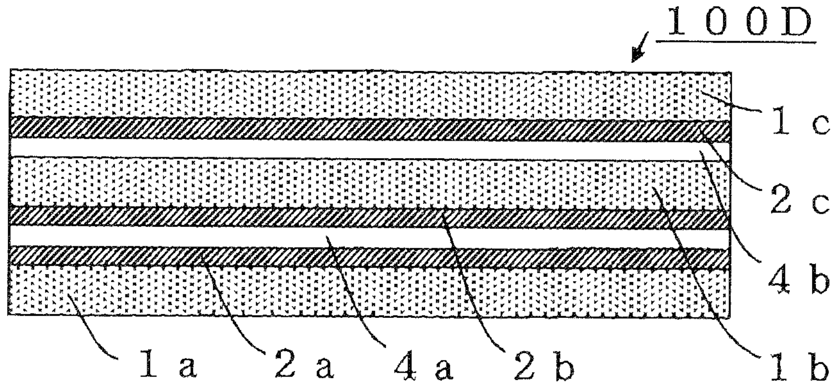
100D
1c
2c
4b
1b
1a
2a
4a
2b

(b)

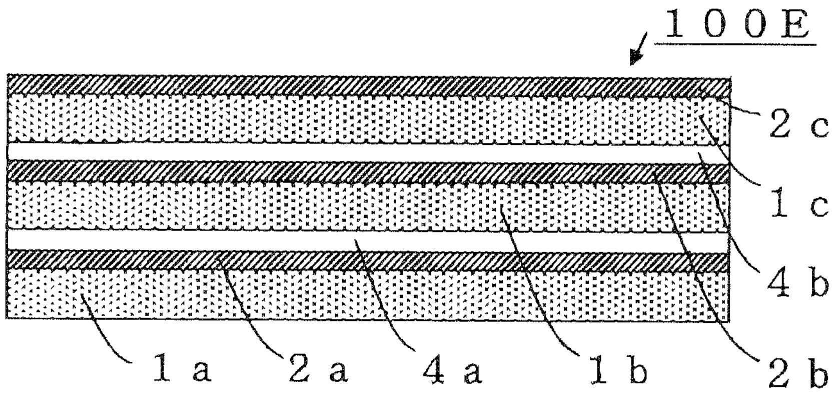
100E
2c
1c
4b
2b
1a
2a
4a
1b

(c)

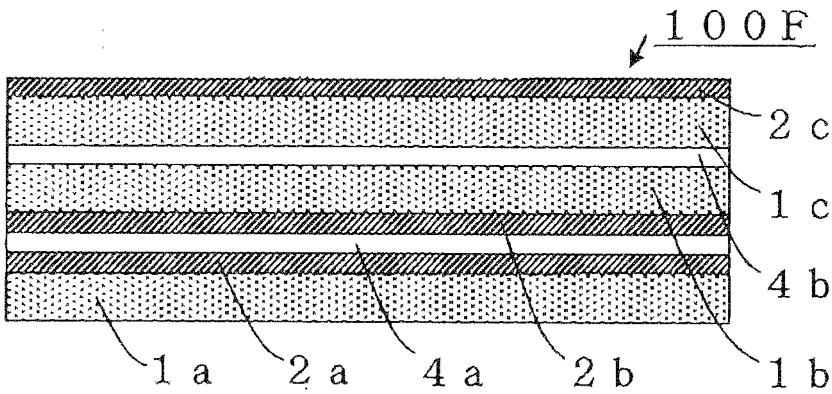
100F
2c
1c
4b
1b
1a
2a
4a
2b

Fig.3

(a)

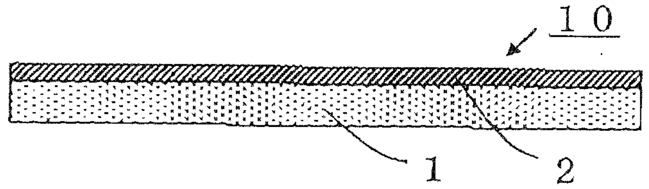


(b)

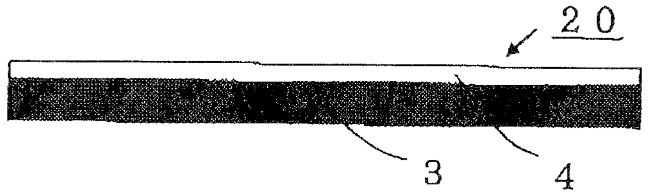


(c)

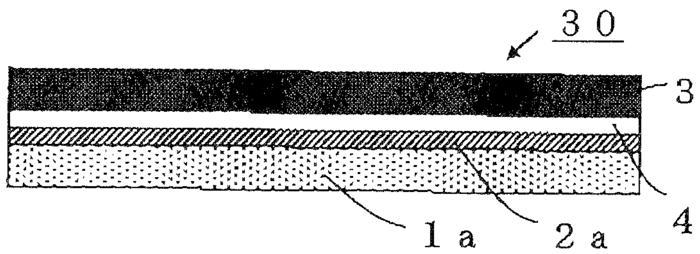


(d)

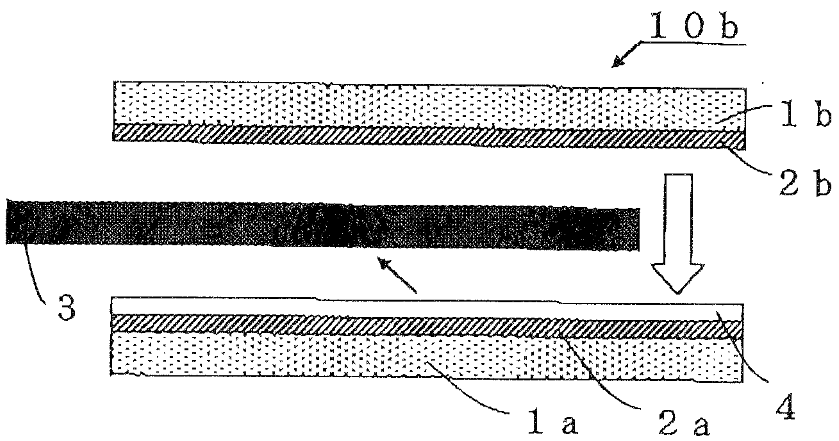


(e)

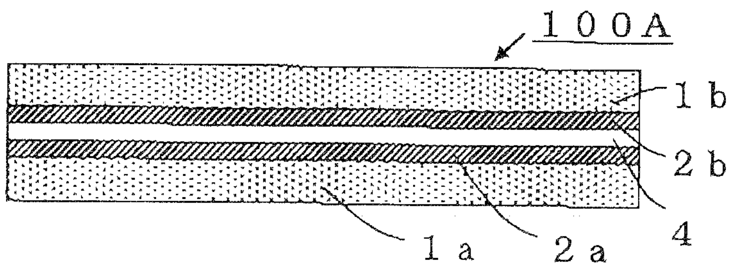

Fig.4

(a)

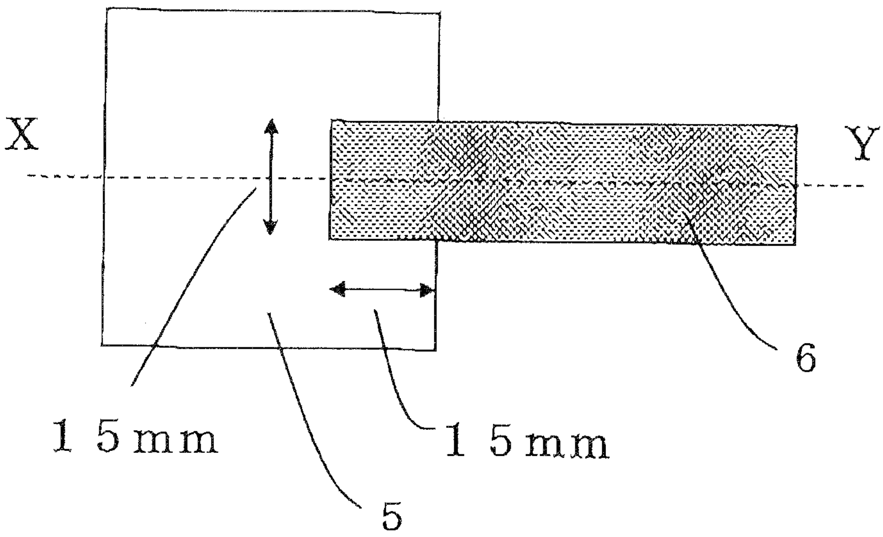


(b)

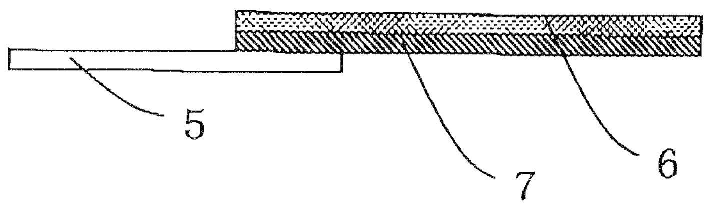

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2737997 A1
- EP 2740777 A1
- WO 2012014814 A1
- WO 2012023389 A1
- WO 2011125602 A1
- JP 2011026418 A
- WO 2013015096 A1
- JP 2000338901 A
- JP 2006123307 A
- JP 2006327098 A
- WO 2010021326 A
- WO 2010107018 A
- JP 63016325 B
- JP 62195024 A
- JP 2084437 A
- JP 63081122 A
- JP 1138108 A
- JP 2175726 A
- JP 5238827 A
- JP 6122852 A
- JP 6306329 A
- JP 6299118 A
- JP 9031333 A
- JP 5345826 A
- JP 4063833 A
- JP 2001026887 A
- JP 2001156013 A